# EUROPÄISCHE PATENTSCHRIFT

(11) **EP 1 807 681 B1**
(45) Veröffentlichungstag und Bekanntmachung des Hinweises auf die Patenterteilung: **07.09.2016**
(21) Anmeldenummer: 05808139.9
(22) Anmeldetag: 25.10.2005
(51) Int. Cl.: G01F 1/84

(54) **MESSAUFNEHMER VOM VIBRATIONSTYP**
VIBRATION-TYPE MEASURING SENSOR
CAPTEUR DE MESURE DE TYPE VIBRATOIRE

(30) Priorität: 04.11.2004 DE 102004053883; 14.12.2004 DE 102004060415
(43) Veröffentlichungstag der Anmeldung: 18.07.2007
(73) Patentinhaber: Endress+Hauser Flowtec AG, 4153 Reinach (CH)
(72) Erfinder: RIEDER, Alfred, 84032 Landshut (DE); SCHÜTZE, Christian, CH-4055 Basel (CH); ANKLIN-IMHOF, Martin, CH-4143 Dornach (CH)
(74) Vertreter: Andres, Angelika Maria
(86) Internationale Anmeldenummer: PCT/EP2005/055554
(87) Internationale Veröffentlichungsnummer: WO 2006/056518

(56) Entgegenhaltungen:
- US-A- 5 261 284
- US-A- 5 705 754
- US-A- 6 044 715
- US-A1- 2002 152 819
- US-A1- 2003 233 868

## Beschreibung

Die Erfindung betrifft einen Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes.
In der Prozeßmeß- und Automatisierungstechnik werden für die Messung physikalischer Parameter, wie z.B. dem Massedurchfluß, der Dichte und/oder der Viskosität, eines in einer Rohrleitung strömenden Mediums oftmals solche In-Line-Meßgeräte verwendet, die mittels eines vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen.

Derartige, insb. als Coriolis-Massedurchflußmesser oder Coriolis-Massedurchfluß-/ Dichtemesser ausgebildete, Meßaufnehmer sind z.B. in der WO-A 04/038341, WO-A 03/076879, der WO-A 03/027616, der WO-A 03/021202der WO-A 01/33174, der WO-A 00/57141, der WO-A 98/07009, der US-B 67 11 958, der US-B 66 66 098, der US-B 63 08 580, der US-A 60 92 429, der US-A 57 96 011, der US-A 53 01 557, der US-A 48 76 898, der EP-A 553 939, der EP-A 1 001 254, der EP-A 1 448 956 oder der EP-A 1 421 349 ausführlich und detailliert beschrieben. Zum Führen des zumindest zeitweise strömenden Mediums umfassen die Meßaufnehmer jeweils mindestens ein an einem zumeist eher dickwandigen, insb. rohrförmigen und/oder balkenartigen, Tragzylinder oder in einem Tragrahmen entsprechend schwingfähig gehaltertes Aufnehmer-Rohr, das zum Erzeugen oben genannter Reaktionskräfte, angetrieben von einer zumeist elektro-dynamischen Erregeranordnung, im Betrieb vibrieren gelassen wird. Zum Erfassen, insb. einlaßseitiger und auslaßseitiger, Vibrationen des Aufnehmer-Rohrs und zum Erzeugen wenigstens eines diese repräsentierenden Schwingungsmeßsignals weisen solche Meßaufnehmer ferner jeweils eine auf Bewegungen und insoweit auch auf mechanische Schwingungen des Aufnehmer-Rohrs reagierende Sensoranordnung auf.

Im Betrieb wird das vorbeschriebene, durch das wenigstens eine Aufnehmer-Rohr, das zumindest darin momentan geführte Medium sowie zumindest anteilig durch die Erreger- und die Sensoranordnung gebildete innere Schwingungssystems des Meßaufnehmers mittels der elektro-mechanischen Erregeranordnung zumindest zeitweise in einem Nutzschwingungsmode zu mechanischen Schwingungen auf wenigstens einer dominierenden Nutz-Schwingungsfrequenz angeregt. Diese Schwingungen im sogenannten Nutzschwingungsmode sind zumeist, insb. bei Verwendung des Meßaufnehmers als Coriolis-Massedurchfluß- und/oder Dichtemesser, zumindest anteilig als Lateral-Schwingungen ausgebildet. Als Nutz-Schwingungsfrequenz wird dabei üblicherweise eine natürliche momentane Resonanzfrequenz des inneren Schwingungssystems gewählt, die wiederum sowohl von Größe, Form und Material des Aufnehmer-Rohrs als auch von einer momentanen Dichte des Mediums abhängig ist; ggf. kann die Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Das von dem wenigstens einen Aufnehmer-Rohr sowie der Erreger- und der Sensoranordnung gemeinsam gebildete innere Schwingungssystem des Meßaufnehmers ist ferner üblicherweise von einem den Tragrahmen bzw. den Tragzylinder als integralen Bestandteil aufweisenden Aufnehmer-Gehäuse eingehaust, wobei letzteres ebenfalls eine Vielzahl von natürlichen Schwingungsmoden aufweist. Für Meßaufnehmer vom Vibrationstyp entsprechend geeignete Aufnehmer-Gehäuse sind beispielsweise in der WO-A 03/076879, der WO-A 03/021202, der WO-A 01/65213, der WO-A 00/57141, der US-B 67 76 052, der US-B 67 11 958, der US-A 60 44 715, der
US-A 53 01 557 oder der EP-A 1 001 254 beschrieben. Die Gehäusekappen solcher Aufnehmer-Gehäuse werden üblicherweise mittels tiefgezogener Halbzeuge einstückig gefertigt. Des weiteren können diese Gehäusekappen aber auch, insb. bei größeren Ausmaßen und wie z.B. auch in der WO-A 03/021202 vorgeschlagen, aus einzelnen schalenförmigen Halbzeugen zusammengesetzt sein. Das in der WO-A 03/021202 beschriebene Aufnehmer-Gehäuse ist mittels eines Tragohrs sowie einer mit diesem verschweißten Gehäusekappe gebildet, wobei die Gehäusekappe selbst aufgrund der besonderen Herstellung ein oberes, im wesentlichen rinnenförmiges erstes Gehäuse-Segment mit einem ersten Segmentrand und mit einem zum ersten Segmentrand im wesentlichen identisch geformten zweiten Segmentrand, ein im wesentlichen ebenes zweites Gehäuse-Segment, das über seinen ersten Segmentrand mit dem ersten Segmentrand des ersten Gehäuse-Segments verbunden ist sowie ein zum zweiten Gehäuse-Segment im wesentlichen spiegelsymmetrisches drittes Gehäuse-Segment, das über seinen ersten Segmentrand mit dem zweiten Segmentrand des ersten Gehäuse-Segments verbunden ist, umfaßt.

Aufnehmer-Gehäuse der beschriebenen Art dienen neben der Halterung des wenigstens einen Aufnehmer-Rohrs ferner auch dazu, dieses, die Erreger- und die Sensoranordnung sowie andere innen liegenden Bauteile vor äußeren Umwelteinflüssen, wie z.B. Staub oder Spritzwasser, zu schützen. Seitens der Anwender wird an derartige Aufnehmer-Gehäuse, insb. auch an deren jeweilige Gehäusekappe, zu dem häufig auch die Anforderung gestellt, daß sie im Falle eines Berstens des Rohrsegments dem dann zumeist deutlich über dem Außendruck liegenden Innendruck zumindest für eine vorgegebene Dauer leckfrei standhalten. Zumindest für Anwendungen mit toxischen oder leicht entzündbaren Medien muß das Aufnehmer-Gehäuse ggf. auch die an einen Sicherheitsbehälter zu stellenden Anforderungen erfüllen können. Ferner wird auch eine ausreichende Dämpfung allfällig vom Meßaufnehmer erzeugter Schallemissionen gefordert.

Die Entwicklung auf dem Gebiet der Meßaufnehmer vom Vibrationstyp hat inzwischen einen Stand erreicht, daß moderne Meßaufnehmer der beschriebenen Art praktisch für nahezu alle Anwendungen der Durchflußmeßtechnik eingesetzt und dort höchsten Anforderungen genügen werden kann. So werden solche Meßaufnehmer in der Praxis für Massendurchflußraten von nur einige wenigen g/h (Gramm pro Stunde) bis zu einigen t/h (Tonnen pro Stunde), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1%, wobei eine untere Grenze des garantierten Meßbereichs durchaus bei etwa 1% des Meßbereichsendwerts liegen kann. Aufgrund der hohen Bandbreite ihrer Einsatzmöglichkeiten können Meßaufnehmer der beschriebenen Art je nach Anwendung zu dem mit nominellen Nennweiten angeboten werden, die gemessen am Flansch zwischen 1 mm und 250 mm oder sogar darüber liegen.

Einhergehend mit immer größer werdenden Nennweiten bei Meßaufnehmern vom Vibrationstyp nimmt praktisch zwangsläufig auch deren Einbau-Masse zu, wobei solche Meßaufnehmer, einschließlich allfällig daran fixierter Flansche, zumindest in Einzel- oder Kleinseriefertigung inzwischen durchaus mit einer gesamten Einbau-Masse von weit über 500 kg realisiert werden. Allerdings ist festzustellen, daß hierbei schon allein durch die baulichen Gegebenheiten in den Anlagen einer weiteren deutlichen Zunahme der Einbau-Masse von solchen Meßaufnehmern natürliche Grenzen gesetzt sein dürften. In Anbetracht auch dessen, daß zu dem die Einbau-Masse aufgrund der für Meßaufnehmer der beschriebenen Art ebenfalls erforderlichen hohen mechanischen Stabilität üblicherweise überproportional zur nominellen Nennweite des Meßaufnehmers steigt, scheint mit den oben erwähnten Maßen eine Höchst-Grenze des für Meßaufnehmer vom Vibrationstyp derzeit wirtschaftlich Realisierbaren nahezu erreicht zu sein. Bei den oben beschriebenen herkömmlichen Bauformen ist ein entsprechendes Einbau-Masse-zu-Nennweite-Verhältnis der gesamten Einbau-Masse des Meßaufnehmers zu dessen nomineller Nennweite für Nennweiten von kleiner 150 mm üblicherweise kleiner als 1 kg/mm, während es bei Nennweiten von über 150 mm, insb. von größer als 200 mm, deutlich über 1,5 kg/mm liegen würde. In Anbetracht dessen, daß bei Meßaufnehmern der beschriebenen Bauform mit Nennweiten von größer 150 mm und bei Verwendung der derzeit üblichen Materialien sehr hohe Einbau-Masse-zu-Nennweite-Verhältnisse zu erwarten sind, scheint insoweit bei Meßaufnehmern vom Vibrationstyp eine Vergrößerung von deren nominellen Nennweiten ohne gleichermaßen erhebliche Zunahme der Einbau-Massen kaum mehr möglich.

Infolge der vorgegebenen Limitationen hinsichtlich der maximalen Einbau-Massen besteht für die Konstruktion von Meßaufnehmern mit großen Nennweiten insoweit ein besonderes Problem darin, daß aufgrund der dann im Betrieb zwangsläufig sehr hohen Gesamt-Masse des oben erwähnten inneren Schwingungssystems (Eigenmasse des Aufnehmer-Rohrs, Masse des im Aufnehmer-Rohr momentan geführten Teilvolumens des zu messenden Mediums, Gesamtmasse der Erreger- und Sensoranordnung etc.) ein äußeres Schwingungssystem des Meßaufnehmers, das zumindest durch das Aufnehmer-Gehäuse einschließlich Tragzylinder bzw. Tragrahmen und ggf. vorgesehene Verteilerstück und/oder Flansche gebildet ist, im Vergleich zum inneren Schwingungssystem immer leichter werden muß. Anders gesagt müssen solche Meßaufnehmer mit großer Nennweiten wegen ihrer zumeist großen Einbau-Masse so konstruiert sein, daß im Vergleich zu herkömmlichen Meßaufnehmern mit kleinere Nennweite ein Massenverhältnis einer Gesamt-Masse des äußeren Schwingungssystems zu einer Gesamt-Masse des inneren Schwingungssystems klein ist.

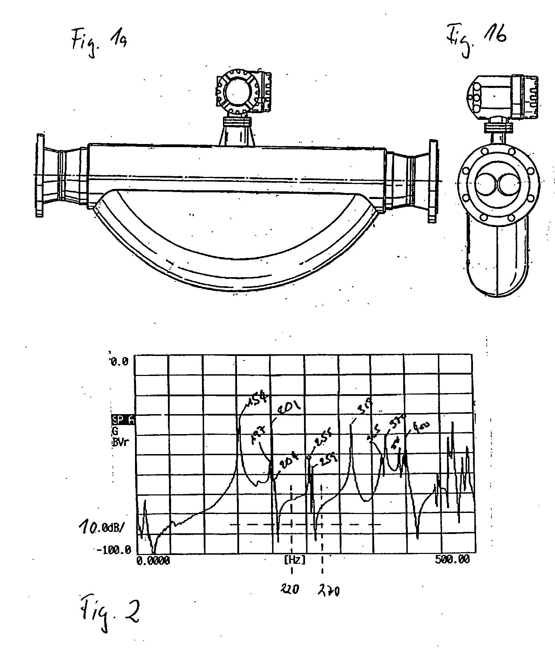

Untersuchungen haben nunmehr jedoch gezeigt, daß bei vergleichsweise kleinen Massenverhältnissen (Gesamt-Masse des äußeren Schwingungssystems : Gesamt-Masse des inneren Schwingungssystems) von kleiner 4:1, wie sie aufgrund oben erwähnten Beschränkung auf eine noch handhabbare Einbau-Masse des Meßaufnehmers im besonderen bei Meßaufnehmern großer Nennweite, insb. bei einer Nennweite von größer als 200 mm, und herkömmlicher Bauart auftreten können, unglücklicherweise Eigenfrequenzen des äußeren Schwingungssystems durchaus in die Nähe der Nutz-Schwingungsfrequenz oder sogar in das Nutz-Frequenzband hinein verschoben werden. Infolgedessen kann beispielsweise der unerwünschte Fall eintreten, daß das betriebsgemäß auf Nutz-Schwingungsfrequenz schwingende innere Schwingungssystem das äußere Schwingungssystems zu Resonanzschwingungen anregt, die ihrerseits wiederum den Schwingungen des inneren Schwingungssystems überlagert sind und insofern auch das von der Sensoranordnung gelieferte Schwingungsmeßsignal erheblich beeinflussen können oder sogar völlig unbrauchbar werden lassen. Die störenden Vibrationen werden dabei in erheblichem Maße von den mit einer Wandstärke von zumeist kleiner als 5 mm eher dünnwandig, gleichwohl aber flächig sehr groß ausgeführten Komponenten des äußeren Schwingungssystems, insb. den erwähnten Gehäuse-Segmenten, verursacht. Beispielsweise konnte für ein äußeres Schwingungssystem gemäß der in der WO-A 03/021202 beschriebenen und in den Fig. 1a, b schematisch dargestellten Bauform mit einem Tragrohr und einer daran fixierten Gehäusekappe das in Fig. 2 exemplarisch gezeigte Frequenzspektrum experimentell ermittelt werden. Deutlich erkennbar ist, daß das äußere Schwingungssystem bei etwa 255 Hz und etwa 259 Hz jeweils einen ausgeprägten Schwingungsmoden aufweist, wobei bei selbigem Meßaufnehmer das vorgenannte Nutz-Frequenzband für das innere Schwingungssystems für einen Frequenzbereich von etwa 210 Hz bis 270 Hz ermittelt worden ist. Demnach würde bei vorbeschriebener Meßaufnehmer-Konfiguration das äußeres Schwingungssystems praktisch über das gesamte eigentlich frei von Störungen zu haltende Nutz-Frequenzband mit dem inneren Schwingungssystem mitschwingen und somit die dabei ermittelten Schwingungssignale, insb. für eine Massendurchfluß- oder auch einen Dichtemessung, praktisch völlig unbrauchbar machen.

Eine Möglichkeit zur Reduzierung solcher vom äußeren Schwingungssystems ausgeführten Stör-Schwingungen besteht beispielsweise darin, wie z.B. auch in der WO-A 01/33174 vorgeschlagen, Zusatzmassen am Aufnehmer-Gehäuses zu fixieren, die mit dem Aufnehmer-Gehäuse praktisch mitschwingen und somit eine gezielte Verstimmung des äußeren Schwingungssystems gegenüber dem inneren Schwingungssystem zu erreichen. Ein Nachteil einer solchen Lösung ist im Hinblick auf die Anwendung auf Meßaufnehmer großer Nennweite allerdings darin zu sehen, daß dies wiederum eine weitere Erhöhung der ohnehin sehr großen Einbau-Masse des Meßaufnehmers zur Folge hätte.

Ausgehend vom oben genannten Stand der Technik besteht daher eine Aufgabe der Erfindung darin, einen Meßaufnehmer vom Vibrationstyp anzugeben, der, insb. unter weitgehender Beibehaltung bereits etablierter und bewährter Bauformen, auch mit großer Nennweite eine möglichst hohe Meßgenauigkeit von 99,8% oder darüber und insoweit einen Meßfehler von kleiner 0,02% aufweist.
Zur Lösung der Aufgabe besteht die Erfindung in einem Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, welcher Meßaufnehmer umfaßt:
- ein Aufnehmer-Gehäuse, das eine Vielzahl von natürlichen Schwingungsmoden aufweist,
- wenigstens ein im Aufnehmer-Gehäuse schwingfähig gehaltertes und zumindest zeitweise vibrierendes erstes Aufnehmer-Rohr zum Führen wenigstens eines Teilvolumens des zu messenden Mediums,
- eine auf das wenigstens eine Aufnehmer-Rohr einwirkende elektro-mechanische, insb. elektrodynamische, Erregeranordnung zum Erzeugen und/oder Aufrechterhalten von mechanischen Schwingungen des wenigstens einen Aufnehmer-Rohrs,
- eine auf Bewegungen des Aufnehmer-Rohrs, insb. Biege-Schwingungen, reagierende Sensoranordnung zum Erzeugen wenigstens eines Schwingungen des Aufnehmer-Rohrs repräsentierenden Schwingungsmeßsignals sowie
- wenigstens ein am Aufnehmer-Gehäuse, insb. direkt, fixiertes, dem Bilden von im wesentlichen ortsfesten Schwingungsknoten im Aufnehmer-Gehäuse dienendes erstes Stützelement zum Unterdrücken oder Auslöschen wenigstens eines natürlichen Schwingungsmodes des Aufnehmer-Gehäuses;
- wobei das wenigstens eine Aufnehmer-Rohr wenigstens ein im wesentlichen U- oder V-förmig gebogenes Rohrsegment aufweist,
- wobei das Aufnehmer-Gehäuse ein, insb. aus Stahl bestehendes, Tragelement, mit dem das wenigstens eine Aufnehmer-Rohr einlaßseitig und auslaßseitig mechanisch verbunden ist, sowie eine vom wenigstens einen Aufnehmer-Rohr beabstandet angeordnete und am Tragelement, insb. dauerhaft und/oder mediumsdicht, fixierte Gehäuse-Kappe zum Einhausen zumindest des wenigstens einen gebogenen Rohrsegments des Aufnehmer-Rohrs aufweist,
- und wobei das wenigstens eine Stützelement anteilig an der Gehäuse-Kappe fixiert und anteilig am Tragzylinder fixiert ist;
- wobei das Tragelement als seitlich zumindest teilweise offener, insb. rohrförmiger, Tragzylinder ausgebildet, der mit dem wenigstens einen Aufnehmer-Rohr so verbunden ist, daß das wenigstens eine gebogene Rohrsegment seitlich aus dem Tragzylinder herausragt,
- wobei das Aufnehmer-Gehäuse seitlich neben dem wenigstens einen gebogenen Rohrsegment des wenigstens einen Aufnehmer-Rohr angeordnete, insb. zumindest abschnittsweise im wesentlichen parallel zum gebogenen Rohrsegment verlaufende und/oder im wesentlichen plattenförmige, Gehäuse-Segmente aufweist,
- und wobei das wenigstens eine Stützelement zumindest anteilig an den Gehäuse-Segmenten fixiert;
- wobei durch das Aufnehmer-Gehäuse und zumindest das wenigstens eine Stützelement ein äußeres Schwingungssystem des Meßaufnehmers und durch das wenigstens eine Aufnehmer-Rohr, das zumindest darin momentan geführte Medium sowie zumindest anteilig durch die Erreger- und die Sensoranordnung ein inneres Schwingungssystems des Meßaufnehmers gebildet sind, und
- wobei das innere Schwingungssystems, angetrieben von der Erregeranordnung, im Betrieb des Meßaufnehmers zumindest zeitweise, insb. als Lateral-Schwingungen ausgebildete, mechanische Schwingungen mit wenigstens einer Nutz-Schwingungsfrequenz ausführt,
   -- die sowohl von Größe, Form und Material des Aufnehmer-Rohrs als auch von einer momentanen Dichte des Mediums abhängig ist, und
   -- die im Betrieb des Meßaufnehmers innerhalb eines vorgegebenen, eine untere und eine obere Grenzfrequenz aufweisenden Nutz-Frequenzbandes veränderlich ist.

Nach einer ersten Ausgestaltung des Meßaufnehmers der Erfindung sind das Aufnehmer-Gehäuse und das wenigstens eine Stützelemente so geformt und miteinander mechanisch so verbunden, daß das zumindest dadurch gebildete äußere Schwingungssystem des Meßaufnehmers, trotz der Schwingungen des Aufnehmer-Rohrs, zumindest innerhalb des Nutz-Frequenzbandes keine oder allenfalls nur solche unerwünschten Stör-Schwingungen ausführt, von denen eine momentan umgesetzte Stör-Schwingungsleistung wesentlich kleiner als eine momentan von den Schwingungen des inneren Schwingungssystems bei Nutz-Schwingungsfrequenz umgesetzte Nutz-Schwingungsleistung ist.

Nach einer zweiten Ausgestaltung des Meßaufnehmers der Erfindung ist ein Nutz-zu-Stör-Leistungsverhältnis der Nutz-Schwingungsleistung zur Stör-Schwingungsleistung zumindest größer als 2, insb. größer als 5. im besonderen entspricht die Stör-Schwingungsleistung dabei einem Mittelwert aller durch Stör-Schwingungen innerhalb des Nutzfrequenzbands momentan umgesetzten Schwingungsleistungen.

Nach einer dritten Ausgestaltung des Meßaufnehmers der Erfindung sind das Aufnehmer-Gehäuse und das wenigstens eine Stützelemente so geformt und miteinander mechanisch so verbunden, daß das zumindest dadurch gebildete äußere Schwingungssystem des Meßaufnehmers, trotz der Schwingungen des Aufnehmer-Rohrs, zumindest innerhalb des Nutz-Frequenzbandes keine oder allenfalls nur solche unerwünschten Stör-Schwingungen ausführt, von denen eine momentan maximale Stör-Schwingungsamplitude wesentlich kleiner als eine momentan maximale Schwingungsamplitude der Schwingungen des inneren Schwingungssystems, insb. des Aufnehmer-Rohrs selbst, ist.

Nach einer vierten Ausgestaltung des Meßaufnehmers der Erfindung ist ein Nutz-zu-Stör-Amplitudenverhältnis der momentan maximalen Schwingungsamplitude der Schwingungen des inneren Schwingungssystems zur momentan maximalen Stör-Schwingungsamplitude größer als 1,5, insb. größer als 2.

Nach einer fünften Ausgestaltung des Meßaufnehmers der Erfindung sind das Aufnehmer-Gehäuse und das wenigstens eine Stützelemente so geformt und miteinander mechanisch so verbunden, daß das zumindest dadurch gebildete äußere Schwingungssystem des Meßaufnehmers, trotz der Schwingungen des Aufnehmer-Rohrs, zumindest innerhalb des Nutz-Frequenzbandes keine oder allenfalls nur solche unerwünschten Stör-Schwingungen ausführt, von denen eine momentane Stör-Schwingungsgüte wesentlich kleiner als eine momentane Nutz-Schwingungsgüte der Schwingungen des inneren Schwingungssystems bei Nutz-Schwingungsfrequenz ist.

Nach einer sechsten Ausgestaltung des Meßaufnehmers der Erfindung ist ein Nutz-zu-Stör-Schwingungsgüte-Verhältnis der momentanen Nutz-Schwingungsgüte zur momentanen Stör-Schwingungsgüte mindestens 50:1 beträgt, insb. größer als 80.

Nach einer siebenten Ausgestaltung des Meßaufnehmers der Erfindung umfaßt die Sensoranordnung einen, insb. einlaßseitig am wenigstens einen Aufnehmer-Rohr angeordneten, ersten Schwingungssensor sowie einen, insb. auslaßseitig am wenigstens einen Aufnehmer-Rohr angeordneten, zweiten Schwingungssensor.

Nach einer achten Ausgestaltung des Meßaufnehmers der Erfindung umfaßt die Erregeranordnung zumindest einen, insb. mittig am wenigstens einen Aufnehmer-Rohr angeordneten, Schwingungserreger.

Nach einer neunten Ausgestaltung des Meßaufnehmers der Erfindung weist das Tragelement eine Masse von wenigstens 70 kg, insb. von mehr als 140 kg, und/oder eine Länge von wenigstens 1000 mm, insb. von mehr als 1200 mm, auf.

Nach einer zehnten Ausgestaltung des Meßaufnehmers der Erfindung-sind wenigstens zwei Gehäuse-Segmente derart einander gegenüberliegend angeordnet, daß das wenigstens eine gebogene Rohrsegment des wenigstens einen Aufnehmer-Rohrs zumindest abschnittsweise zwischen den beiden Gehäuse-Segmenten verläuft.

Nach einer elften Ausgestaltung des Meßaufnehmers der Erfindung ist das wenigstens eine Stützelement mittels wenigstens einer massiven Platte gebildet, die mit dem Aufnehmer-Gehäuse an zumindest zwei einander gegenüberliegenden Fixierstellen, insb. mittels Bolzen und/oder zumindest teilweise wieder lösbar, verbunden ist.

Nach einer zwölften Ausgestaltung des Meßaufnehmers der Erfindung weist das wenigstens eine Stützelement eine Masse von wenigstens 3 kg auf.

Nach einer dreizehnten Ausgestaltung des Meßaufnehmers der Erfindung ist das wenigstens eine Stützelement zumindest punktuell mit dem Aufnehmer-Gehäuse verschweißt und/oder verlötet, insb. hartverlötet.

Nach einer vierzehnten Ausgestaltung des Meßaufnehmers der Erfindung ist das wenigstens eine Stützelement zumindest punktuell mit dem Aufnehmer-Gehäuse verschraubt.

Nach einer fünfzehnten Ausgestaltung des Meßaufnehmers der Erfindung ist das wenigstens eine Stützelement zumindest punktuell im Bereich eines Schwingungsbauches, insb. einer örtlichen Schwingungsamplitude, eines natürlichen Schwingungsmodes des Aufnehmer-Gehäuses an selbigem fixiert.

Nach einer sechzehnten Ausgestaltung des Meßaufnehmers der Erfindung ist wenigstens eine an das Aufnehmer-Gehäuse gekoppelte, insb. sich zumindest abschnittsweise zwischen dem wenigstens einen Stützelement und Aufnehmer-Gehäuses erstreckende, schwingungsdämpfende Einlage vorgesehen. Nach einer Weiterbildung der dieser Ausgestaltung der Erfindung besteht die schwingungsdämpfende Einlage aus einem Kunststoff, einem Gummi, einem Silikon oder dergleichen. Nach einer anderen Weiterbildung der Erfindung erstreckt sich die Einlage zumindest abschnittsweise zwischen dem wenigstens einen Stützelement und dem Aufnehmer-Gehäuse.

Nach einer siebzehnten Ausgestaltung des Meßaufnehmers der Erfindung weist dieser ferner ein ebenfalls am Aufnehmer-Gehäuse, insb. direkt, fixiertes, insb. zum ersten Stützelement im wesentlichen identisches, zweites Stützelement zum Bilden von im wesentlichen ortsfesten Schwingungsknoten im Aufnehmer-Gehäuse auf, wobei das äußere Schwingungssystem des Meßaufnehmers insoweit zumindest auch das zweite Stützelement mit umfaßt. Nach einer Weiterbildung dieser Ausgestaltung des Meßaufnehmers der Erfindung umfaßt die Sensoranordnung einen, insb. einlaßseitig am wenigstens einen Aufnehmer-Rohr angeordneten, ersten Schwingungssensor sowie einen, insb. auslaßseitig am wenigstens einen Aufnehmer-Rohr angeordneten, zweiten Schwingungssensor, und sind das erste Stützelement zumindest anteilig in der Nähe des ersten Schwingungssensors und das zweite Stützelement zumindest anteilig in der Nähe des zweiten Schwingungssensors am Aufnehmer-Gehäuse fixiert.

Nach einer achtzehnten Ausgestaltung des Meßaufnehmers der Erfindung weist dieser ferner ein ebenfalls am Aufnehmer-Gehäuse, insb. direkt, fixiertes drittes Stützelement zum Bilden von im wesentlichen ortsfesten Schwingungsknoten im Aufnehmer-Gehäuse auf, wobei das äußere Schwingungssystem des Meßaufnehmers insoweit zumindest auch das dritte Stützelement mit umfaßt. Nach einer Weiterbildung dieser Ausgestaltung des Meßaufnehmers der Erfindung umfaßt die Erregeranordnung zumindest einen, insb. mittig am wenigstens einen Aufnehmer-Rohr angeordneten, Schwingungserreger, und ist das dritte Stützelement zumindest anteilig in der Nähe des Schwingungserregers am Aufnehmer-Gehäuse fixiert.

Nach einer neunzehnten Ausgestaltung des Meßaufnehmers der Erfindung weist dieser für das Anschließen des Meßaufnehmers an die Rohrleitung ferner einen einlaßseitigen ersten Anschlußflansch sowie einen auslaßseitigen zweiten Anschlußflansch auf, wobei das äußere Schwingungssystem des Meßaufnehmers insoweit zumindest auch den ersten und den zweiten Anschlußflansch mit umfaßt. Nach einer Weiterbildung dieser Ausgestaltung des Meßaufnehmers der Erfindung weist jeder der beiden Anschlußflansche dabei eine Masse von mehr als 50 kg, insb. von mehr als 60 kg, auf.

Nach einer zwanzigsten Ausgestaltung des Meßaufnehmers der Erfindung umfaßt dieser weiters ein, zum ersten Aufnehmer-Rohr im wesentlichen identisches und/oder im wesentlichen parallel verlaufendes, zweites Aufnehmer-Rohr. Nach einer Weiterbildung dieser Ausgestaltung des Meßaufnehmers der Erfindung weist dieser ferner wenigstens eine das erste und das zweite Aufnehmer-Rohr einlaßseitig miteinander verbindende erste Knotenplatte sowie wenigstens eine das erste und das zweite Aufnehmer-Rohr auslaßseitig miteinander verbindende zweite Knotenplatte auf, wobei das innere Schwingungssystem des Meßaufnehmers insoweit zumindest auch die erste und die zweite Knotenplatte mit umfaßt. Nach einer anderen Weiterbildung dieser Ausgestaltung des Meßaufnehmers der Erfindung weist dieser ferner ein das erste und das zweite Aufnehmer-Rohr einlaßseitig miteinander verbindendes erstes Verteilerstück sowie ein das erste und das zweite Aufnehmer-Rohr auslaßseitig miteinander verbindendes zweites Verteilerstück auf, wobei das äußere Schwingungssystem des Meßaufnehmers insoweit zumindest auch das erste und das zweite Verteilerstück mit umfaßt. Im besonderen weist jedes der beiden Verteilerstücke dabei eine Masse von mehr als 10 kg, insb. von mehr als 20 kg, auf.

Nach einer einundzwanzigsten Ausgestaltung des Meßaufnehmers der Erfindung entspricht die momentane Nutz-Schwingungsfrequenz im wesentlichen einer momentanen natürlichen Eigenfrequenz des inneren Schwingungssystems.

Nach einer zweiundzwanzigsten Ausgestaltung des Meßaufnehmers der Erfindung weist das das äußere Schwingungssystem des Meßaufnehmers wenigstens einen Schwingungsmode mit einer niedrigsten natürlichen Eigenfrequenz auf, die kleiner als die untere Grenzfrequenz des Nutz-Frequenzbandes ist.

Nach einer dreiundzwanzigsten Ausgestaltung des Meßaufnehmers der Erfindung weist das innere Schwingungssystem zumindest einen Schwingungsmode mit einer natürlichen Eigenfrequenz auf, die im Betrieb stets größer ist als die niedrigste natürliche Eigenfrequenz des äußeren Schwingungssystems ist.

Nach einer vierundzwanzigsten Ausgestaltung des Meßaufnehmers der Erfindung weist das äußere Schwingungssystem zumindest einen Schwingungsmode mit einer natürlichen Eigenfrequenz auf, die kleiner ist als die obere Grenzfrequenz des Nutz-Frequenzbandes und die die größer ist als die untere Grenzfrequenz des Nutz-Frequenzbandes ist.

Nach einer fünfundzwanzigsten Ausgestaltung des Meßaufnehmers der Erfindung ist die obere Grenzfrequenz des Nutz-Frequenzbandes gegeben, wenn die Dichte des Mediums im wesentlichen Null, insb. etwa gleich einer Dichte von Luft, ist.

Nach einer sechsundzwanzigsten Ausgestaltung des Meßaufnehmers der Erfindung ist die untere Grenzfrequenz des Nutz-Frequenzbandes gegeben, wenn die Dichte des Mediums größer ist als 400 kg/m³.

Nach einer siebenundzwanzigsten Ausgestaltung des Meßaufnehmers der Erfindung ist die untere Grenzfrequenz des Nutz-Frequenzbandes gegeben, wenn die Dichte des Mediums kleiner ist als 2000 kg/m³.

Nach einer achtundzwanzigsten Ausgestaltung des Meßaufnehmers der Erfindung ist die obere Grenzfrequenz des Nutzfrequenzbandes gegeben, wenn eine Viskosität des Mediums kleiner als 100·10⁻⁶ Pas, insb. etwa gleich einer Viskosität von Luft, ist.

Nach einer neunundzwanzigsten Ausgestaltung des Meßaufnehmers der Erfindung ist die untere Grenzfrequenz des Nutzfrequenzbandes gegeben, wenn eine Viskosität des Mediums größer ist als 300·10⁻⁶ Pas.

Nach einer dreißigsten Ausgestaltung des Meßaufnehmers der Erfindung ist die untere Grenzfrequenz des Nutzfrequenzbandes gegeben, wenn eine Viskosität des Mediums kleiner ist als 3000·10⁻⁶ Pas.

Nach einer einunddreißigsten Ausgestaltung des Meßaufnehmers der Erfindung weist das Nutzfrequenzband eine Bandbreite von wenigstens 20 Hz, insb. von mehr als 50 Hz, auf.

Nach einer zweiunddreißigsten Ausgestaltung des Meßaufnehmers der Erfindung bestehen das wenigstens eine Aufnehmer-Rohr und das Aufnehmer-Gehäuse zumindest anteilig aus Stahl, insb. Edelstahl.

Nach einer dreiunddreißigsten Ausgestaltung des Meßaufnehmers der Erfindung weist das wenigstens eine Aufnehmer-Rohr eine Masse von wenigstens 10 kg, insb. von größer als 25 kg, auf.

Nach einer vierunddreißigsten Ausgestaltung des Meßaufnehmers der Erfindung weist das Aufnehmer-Rohr einen Innen-Durchmesser auf, der wenigstens 80 mm beträgt, insb. größer als 100 mm ist.

Nach einer fünfunddreißigsten Ausgestaltung des Meßaufnehmers der Erfindung weist das Aufnehmer-Rohr eine gestreckte Länge auf, die wenigstens 1000 mm beträgt, insb. größer als 1500 mm ist.

Nach einer sechsunddreißigsten Ausgestaltung des Meßaufnehmers der Erfindung weist das Aufnehmer-Gehäuse eine Masse von wenigstens 80 kg, insb. von mehr als 160 kg, auf.
Nach einer siebenunddreißigsten Ausgestaltung des Meßaufnehmers der Erfindung weist das Aufnehmer-Gehäuse eine kleinste Wandstärke auf, die kleiner als 6 mm ist.

Nach einer achtunddreißigsten Ausgestaltung des Meßaufnehmers der Erfindung beträgt eine Gesamt-Masse des inneren Schwingungssystems wenigstens 70 kg. Nach einer Weiterbildung dieser Ausgestaltung des Meßaufnehmers der Erfindung ist die Gesamt-Masse im Betrieb zumindest zeitweise größer als 90 kg.

Nach einer neununddreißigsten Ausgestaltung des Meßaufnehmers der Erfindung beträgt eine Gesamt-Masse des äußeren Schwingungssystems wenigstens 200 kg. Nach einer Weiterbildung dieser Ausgestaltung des Meßaufnehmers der Erfindung ist die Gesamt-Masse größer als 300 kg.

Nach einer vierzigsten Ausgestaltung des Meßaufnehmers der Erfindung ist ein Massenverhältnis einer Gesamt-Masse des äußeren Schwingungssystems zu einer Gesamt-Masse des inneren Schwingungssystems im Betrieb zumindest zeitweise kleiner als 3, insb. kleiner als 2,5. Nach einer Weiterbildung dieser Ausgestaltung des Meßaufnehmers der Erfindung ist das Massenverhältnis der Gesamt-Masse des äußeren Schwingungssystems zu der Gesamt-Masse des inneren Schwingungssystems dauerhaft kleiner als 3 ist.

Nach einer einundvierzigsten Ausgestaltung des Meßaufnehmers der Erfindung beträgt ein Einbau-Masse-zu-Nennweite-Verhältnis einer Einbau-Masse des gesamten Meßaufnehmers zu einer nominellen Nennweite des Meßaufnehmers, die einem Kaliber der Rohrleitung, in deren Verlauf der Meßaufnehmer einzusetzen ist, wenigstens 1,5 kg/mm. Nach einer Weiterbildung dieser Ausgestaltung des Meßaufnehmers der Erfindung ist das Einbau-Masse-zu-Nennweite-Verhältnis größer als 2 kg/mm.

Nach einer zweiundvierzigsten Ausgestaltung des Meßaufnehmers der Erfindung ist die Einbau-Masse des gesamten Meßaufnehmers größer als 200 kg, insb. größer als 400 kg.

Nach einer dreiundvierzigsten Ausgestaltung der Erfindung weist die Gehäuse-Kappe eine Masse von wenigstens 10 kg, insb. von mehr als 20 kg, auf.

Nach einer vierundvierzigsten Ausgestaltung der Erfindung ist das wenigstens eine Stützelement mittels wenigstens einer massiven Platte gebildet, die zumindest punktuell, insb. zumindest teilweise wieder lösbar und/oder zumindest punktuell stoffschlüssig, sowohl an der Gehäusekappe als auch am Tragzylinder fixiert ist.

Nach einer Weiterbildung der Erfindung umfaßt die Gehäuse-Kappe ein rinnenförmiges erstes Gehäuse-Segment mit einem kreisbogenförmigen ersten Segmentrand von vorgebbarem Radius und mit einem zum ersten Segmentrand im wesentlichen identisch geformten zweiten Segmentrand, wobei das erste Gehäuse-Segment einen kreisbogenförmigen Querschnitt mit einem Radius aufweist, der kleiner als der Radius des ersten Segmentrands ist. Ferner umfaßt die Gehäuse-Kappe ein im wesentlichen ebenes zweites Gehäuse-Segment, das über einen kreisbogenförmigen ersten Segmentrand mit dem ersten Segmentrand des ersten Gehäuse-Segments verbunden ist sowie ein zum zweiten Gehäuse-Segment im wesentlichen spiegelsymmetrisches drittes Gehäuse-Segment, das über einen kreisbogenförmigen ersten Segmentrand mit dem zweiten Segmentrand des ersten Gehäuse-Segments verbunden ist, wobei das zweite und dritte Gehäuse-Segment vorzugsweise jeweils in einer Tangentialebene des ersten Gehäuse-Segments liegen.

Ein Grundgedanke der Erfindung besteht darin, das äußere Schwingungssystem, also jene Komponenten des Meßaufnehmers deren mechanische Schwingungen im Betrieb des Meßaufnehmers eher erwünscht und insoweit allenfalls Stör-Schwingungen sind, mittels der zusätzlichen Stützelemente zumindest für solche Schwingungsfrequenzen als Bandsperre auszubilden, die innerhalb des Nutz-Frequenzbandes liegen würden, das seinerseits wiederum überwiegend von der tatsächlichen Ausprägung des inneren Schwingungssystems abhängig ist. Anders gesagt wird durch die gezielte Abstimmung des äußeren Schwingungssystems auf das innere Schwingungssystem mittels der Stützelemente ein Sperr-Frequenzband gegen potentielle Stör-Schwingungen geschaffen, innerhalb dem allfällige Stör-Schwingungen des äußeren Schwingungssystems zumindest wirksam unterdrückt werden. Die Erfindung beruht dabei u.a. auf der Erkenntnis, daß die potentiellen Stör-Schwingungen im Bereich des Nutz-Frequenzbandes überwiegend von den Schwingungseigenschaften der eher dünnwandig und flächig sehr groß ausgeführten Gehäuse-Segmenten bestimmt werden, gleichwohl aber eine besonders wirksame Entstörung des Meßaufnehmers bei geeigneter Positionierung der Stützelemente auch schon durch wenige solcher zusätzlichen Fixationspunkte im Aufnehmer-Gehäuses und somit durch Hinzunahme nur einer vergleichsweise geringfügige Zusatzmasse erfolgen kann.

Ein Vorteil der Erfindung besteht darin, daß bereits durch die Verwendung einiger weniger, im Prinzip eine Biegesteifigkeit der Gehäuse-Segmente erhöhender, Stützelemente und insoweit im Vergleich zu herkömmlichen Meßaufnehmern ohne großen Mehraufwand ein Nutz-Frequenzband bzw. eine Sperr-Frequenzband für potentielle Stör-Schwingungen realisiert werden kann, das über einen für den sinnvollen Betrieb von Meßaufnehmern mit einem kritischen Einbau-Masse-zu-Nennweite-Verhältnis von größer 1,5 kg/mm, insb. auch von größer 2 kg/mm, und/oder einem kritischen Massenverhältnis der Gesamt-Masse des äußeren Schwingungssystems zur Gesamt-Masse des inneren Schwingungssystems von kleiner 4, insb. auch von kleiner 3, einem ausreichend weiten Frequenzbereich von Stör-Schwingungen weitgehend freigehalten ist. Insofern ist ein weiterer Vorteil der Erfindung darin zu sehen, daß dadurch eine Möglichkeit geschaffen wird, Meßaufnehmer vom Vibrationstyp auch mit großer nomineller Nennweite von über 150 mm, insb. mit einer Nennweite von größer 200 mm, einerseits wirtschaftlich sinnvoll und anderseits auch noch mit einer handhabbaren Einbau-Masse realisiert werden können. Ein weiterer Vorteil der Erfindung besteht darin, daß dabei auch bereits etablierte und bewährte Bauformen weitgehend beibehalten werden können.

Der erfindungsgemäße Meßaufnehmer ist daher besonders zum Messen von strömungsfähigen Medien geeignet, die in einer Rohrleitung mit einem Kaliber von größer 150 mm, insb. von 250 mm oder darüber, geführt sind. Zu dem ist der Meßaufnehmer auch zum Messen auch solcher Massendurchflüsse geeignet, die zumindest zeitweise größer als 900 t/h sind, insb. zumindest zeitweise mehr als 1200 t/h betragen, wie sie z.B. bei Anwendungen zur Messung von Erdöl, Erdgas oder anderen petrochemischen Stoffen auftreten können.

Die Erfindung wird nun anhand von Ausführungsbeispielen sowie den Figuren der Zeichnung näher erläutert. Funktionsgleiche Teile sind in den einzelnen Figuren mit denselben Bezugszeichen versehen, die jedoch in nachfolgenden Figuren nur dann wiederholt sind, wenn es sinnvoll erscheint.
- Fig. 1a, b: zeigen ein herkömmliches, beispielsweise als Coriolis-Durchfluss/DichteNiskositäts-Aufnehmer dienendes In-Line-Meßgerät mit einem Meßaufnehmer vom Vibrationstyp in verschieden Seitenansichten,
- Fig. 2: zeigt ein experimentell ermitteltes Spektrum mechanischer Eigenfrequenzen eines für ein In-line-Meßgerät gemäß den Fig. 1a, b verwendeten Meßaufnehmers vom Vibrationstyp,
- Fig. 3a, b: zeigen ein, beispielsweise als Coriotis-Durchfluss/Dichte/Viskositäts-Aufnehmer dienendes In-Line-Meßgerät mit einem verbesserten Meßaufnehmer vom Vibrationstyp in verschieden Seitenansichten,
- Fign. 4 bis 7: zeigen Einzelheiten eines für eine In-Line-Meßgerät nach Fig. 3a, b geeigneten Meßaufnehmers vom Vibrationstyp in verschiedenen, teilweise geschnitten Seitenansichten,
- Fig. 8: zeigt ein experimentell ermitteltes Spektrum mechanischer Eigenfrequenzen eines Meßaufnehmers gemäß den Fign. 4 - 7 und
- Fig. 9 bis 11: zeigen Einzelheiten einer nicht zur Erfindung gehörigen Variante eines für eine In-Line-Meßgerät nach Fig. 3a, b geeigneten Meßaufnehmers vom Vibrationstyp in verschiedenen geschnitten Seitenansichten.

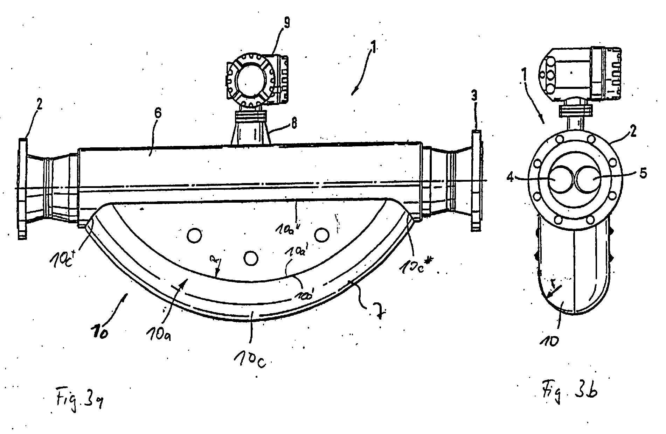

In den Fig. 3a, b ist ein, insb. als Coriolis-Massedurchfluß- und/oder Dichte-Meßgerät ausgebildetes, In-Line-Meßgerät 1 dargestellt, das dazu dient, einen Massendurchfluß m eines in einer- hier aus Übersichtlichkeitsgründen nicht dargestellten - Rohrleitung strömenden Mediums zu erfassen und in einen diesen Massendurchfluß momentan repräsentierenden Massendurchfluß-Meßwert Xₘ abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das In-Line-Meßgerät 1 ggf. auch dazu verwendet werden eine Dichte ρ und/oder eine Viskosität η des Mediums zu messen. Im besonderen ist er Meßaufnehmer dafür vorgesehen, solche Medien, wie z.B. Erdöl, Erdgas oder andere petrochemische Stoffe, zu messen, die in einer Rohrleitung mit einem Kaliber von größer als 150 mm, insb. einem Kaliber von 250 mm oder darüber, strömen und/oder die zumindest zeitweise einen Massendurchfluß von größer als 900 t/h, insb. von größer 1200 t/h, aufweisen. Das In-Line-Meßgerät 1 umfaßt dafür einen im Betrieb vom zu messenden Medium durchströmten Meßaufnehmer 10 vom Vibrationstyp sowie eine mit dem Meßaufnehmer 10 elektrisch verbundene - hier nicht im einzelnen, sondern lediglich als schematisch als Schaltungsblock dargestellte - Meßgerät-Elektronik 20. In vorteilhafter Weise ist die Meßgerät-Elektronik 20 so ausgelegt, daß sie im Betrieb des In-Line-Meßgerät 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem Feldbussystem, Meß- und/oder andere Betriebsdaten austauschen kann. Des weiteren ist die Meßgerät-Elektronik so ausgelegt, daß sie von einer externen Energieversorgung, beispielsweise auch über das vorgenannte Feldbussystem, gespeist werden kann. Für den Fall, daß das In-line-Meßgerät für eine Ankopplung an ein Feldbus- oder ein anderes Kommunikationssystem vorgesehen ist, weist die, insb. programmierbare, Meßgerät-Elektronik 20 zu dem eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf.

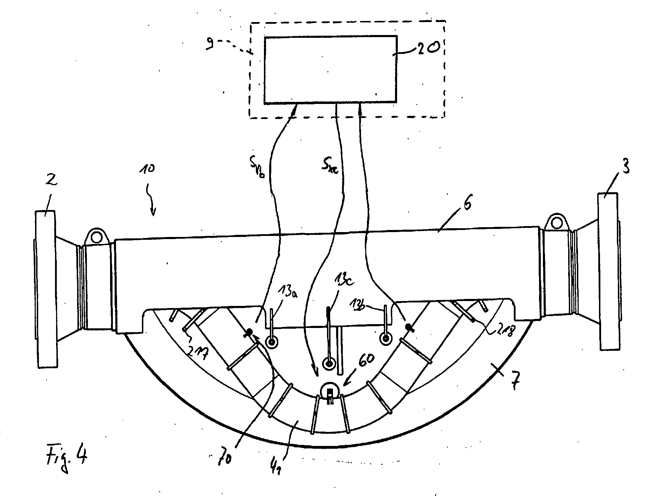

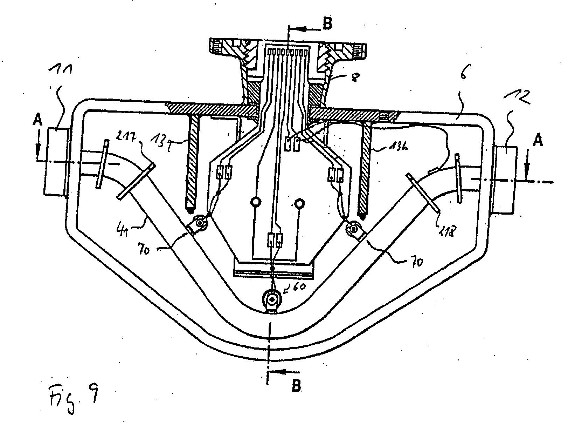

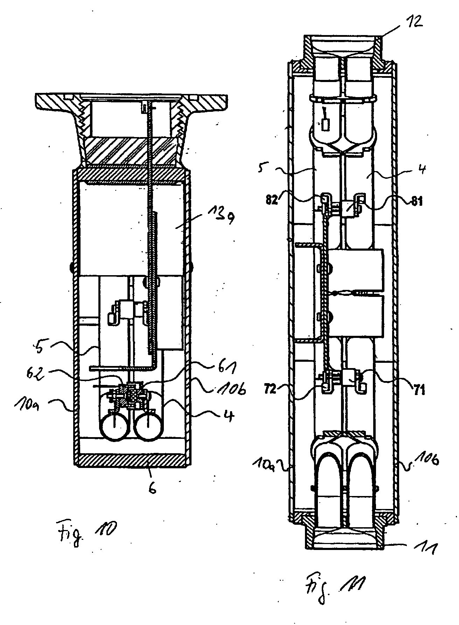

In den Fig. 4 bis 7 ist in unterschiedlichen Darstellungsarten ein Ausführungsbeispiel für den, insb. als Coriolis-Massedurchfluss-, als Dichte- und/oder als Viskositäts-Aufnehmer dienenden, Meßaufnehmer 1 gezeigt, während in den Fig. 9 bis 11 ferner ein Ausführungsbeispiel für eine nicht zur Erfindung gehörigen andere Variante eines solchen Meßaufnehmers dargestellt ist. Wie bereits erwähnt, dient der Meßaufnehmer 1 dazu, in einem hindurchströmenden Medium solche mechanische Reaktionskräfte, insb. vom Massendurchfluß abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Meßgerät-Elektronik entsprechend implementierten Auswerte-Verfahren in der dem Fachmann bekannten Weise z.B. der Massendurchfluß, die Dichte und/oder die Viskosität des Mediums gemessen werden. Der Meßaufnehmer 1 ist im Betrieb in den Verlauf einer von einem zu messenden, insb. pulvrigen, flüssigen, gasförmigen oder dampfförmigen, Medium durchströmten - aus Gründen der Übersichtlichkeit jedoch nicht dargestellten - Rohrleitung über Flansche 2, 3, einzusetzen. Anstatt mittels Flanschen kann der Meßaufnehmer 1 an die erwähnte Rohrleitung auch durch andere bekannte Mittel angeschlossen werden, wie z.B. mittels Triclamp-Anschlüssen oder Schraubverbindungen.

Zum Führen wenigstens eines Teilvolumens des zu messenden Mediums umfaßt der Meßaufnehmer wenigstens ein in einem Aufnehmer-Gehäuse 10 schwingfähig gehaltertes, als Meßrohr dienendes erstes Aufnehmer-Rohr 4, das im Betrieb mit der Rohrleitung kommuniziert und zumindest zeitweise in wenigstens einem für Ermittlung der physikalischen Meßgröße geeigneten Schwingungsmode vibrieren gelassen wird. Neben dem Aufnehmer-Gehäuse 10 und dem darin gehalterten wenigstens einen Aufnehmer-Rohr 4 umfaßt der Meßaufnehmer 1 eine auf das wenigstens eine Aufnehmer-Rohr 4 einwirkende elektro-mechanische, insb. elektro-dynamische, Erregeranordnung 60 zum Erzeugen und/oder Aufrechterhalten von mechanischen Schwingungen sowie eine auf mechanische Schwingungen, beispielsweise Biege-Schwingungen, des Aufnehmer-Rohrs 4 reagierende Sensoranordnung 70 zum Erzeugen wenigstens eines Schwingungen des Aufnehmer-Rohrs 4 repräsentierenden Schwingungsmeßsignals s_{vb}. Zumindest das Aufnehmer-Rohr sowie daran zusätzlich fixierte Komponenten, wie z.B. Teil der Erregeranordnung 60 und der Sensoranordnung 70 bilden somit praktisch ein inneres Schwingungssystem des Meßaufnehmers.

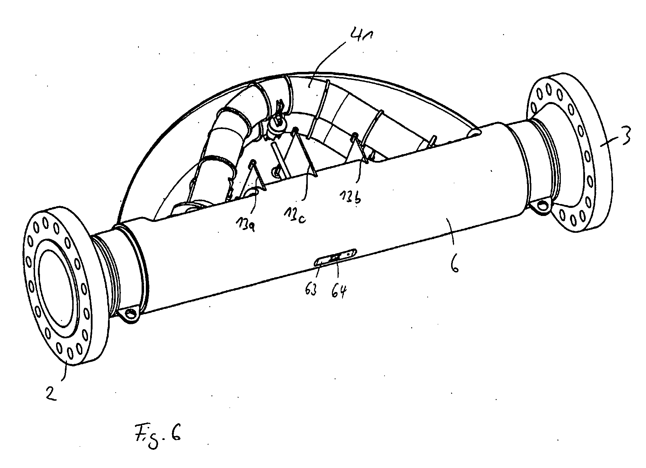

Zum Ermitteln der wenigstens einen physikalische Meßgröße anhand des wenigstens einen Schwingungsmeßsignals sind die Erregeranordnung 60 und die Sensoranordnung 70 ferner, wie bei derartigen Meßaufnehmern üblich, in geeigneter Weise mit einer in der Meßgerät-Elektronik 20 entsprechend vorgesehenen der Meß- und Betriebsschaltung gekoppelt, beispielsweise galvanisch und/oder opto-elektronisch verbunden. Die Meß- und Betriebsschaltung wiederum erzeugt einerseits ein die Erregeranordnung 60 entsprechend treibendes, beispielsweise hinsichtlich eines Erregerstromes und/oder einer Erregerspannung geregeltes, Erregersignal s_{xc}. Andererseits empfängt die Meß- und Betriebsschaltung das wenigstens eine Schwingungsmeßsignal s_{vb} der Sensoranordnung 70 und generiert daraus gewünschte Meßwerte, die beispielsweise einen Massedurchfluß, eine Dichte und/oder eine Viskosität des zu messenden Mediums repräsentieren können und die ggf. vor Ort angezeigt oder auch ggf. übergeordnet weiterverarbeitet werden. Die Meßgerät-Elektronik 20 einschließlich der Meß- und Betriebsschaltung kann beispielsweise in einem separaten Elektronik-Gehäuse 9 untergebracht sein, das vom Meßaufnehmer entfernt angeordnet oder, unter Bildung eines einzigen Kompaktgeräts, direkt am Meßaufnehmer 1, beispielsweise von außen am Aufnehmer-Gehäuse 10, fixiert ist. Bei dem in Fig. 1 gezeigten Ausführungsbeispiel ist daher am Aufnehmer-Gehäuse ferner ein dem Haltern des Elektronik-Gehäuses 9 dienendes halsartiges Übergangsstücks 8 angebracht. In den Fig. 4 bis 6 sind das Übergangsstück 8 und das Elektronik-Gehäuse 9 allerdings weggelassen; lediglich in Fig. 6 ist eine in eine Wand des Aufnehmer-Gehäuses 10 eingelassene Ansatzfläche 63 für das Übergangsstück 8 zu sehen. In der Ansatzfläche 63 ist eine elektrische Durchführung 64 angeordnet, mittels der elektrische Verbindungen zur Erregeranordnung 60 und zur Sensoranordnung 70 sowie gegebenenfalls weiteren elektrischen Komponenten, wie z.B. im Meßaufnehmer 1 ggf. vorgesehenen Druck- und/oder Temperatursensoren, herstellbar sind.

Der Meßaufnehmer 1 umfaßt, wie bereits angedeutet, mindestens ein als Meßrohr dienendes Aufnehmer-Rohr 4, wobei das wenigstens eine Aufnehmer-Rohr 4 gemäß einer vorteilhaften Ausgestaltung der Erfindung wenigstens ein in wenigstens einer Ebene zumindest abschnittsweise gebogenes Rohrsegment 41 aufweist. Das Aufnehmer-Rohr 4 kann dabei beispielsweise, wie auch in der US-B 67 76 052 gezeigt, eine ausgeprägte U-Form aufweisen oder, wie auch in der US-B 68 02 224 oder der US-B 67 11 958 vorgeschlagen und in den Fig. 4 - 6 gezeigt, im wesentlichen V-förmig ausgebildet sein. Des weiteren kann das Aufnehmer-Rohr aber auch, wie z.B. in der US-A 57 96 011 beschrieben, nur sehr geringfügig oder, wie z.B. in der WO-A 01/65213, der US-B 63 08 580, der US-A 53 01 557, der US-A 60 92 429, der US-A 60 44 715 gezeigt, eher rechteck- oder trapezartig ausgebogen sein. Als Material für das Aufnehmer-Rohr eignen sich im besonderen Stahl, insb. Edelstahl, Titan, Zirkonium oder Tantal. Darüber hinaus kann als Material für das wenigstens Aufnehmer-Rohr aber auch praktisch jeder andere dafür üblicherweise verwendete oder zumindest geeignete Werkstoff dienen.

Wie bereits erwähnt ist er Meßaufnehmer 1 im besonderen für Messungen auch hoher Massendurchflüsse in einer Rohrleitung von großem Kaliber vorgesehen. Aufgrund dessen ist nach einer weiteren Ausgestaltung des Meßaufnehmers 1 vorgesehen, daß das wenigstens eine Aufnehmer-Rohr 4 einen Innen-Durchmesser aufweist, der wenigstens 80 mm beträgt. Im besonderen ist das wenigstens eine Aufnehmer-Rohr 4 so ausgebildet, das dessen Innen-Durchmesser größer als 100 mm, insb. auch größer als 110 mm, ist. Ferner ist das wenigstens eine Aufnehmer-Rohr 4 nach einer anderen Ausgestaltung so bemessen, daß es eine gestreckte Länge von wenigstens 1000 mm aufweist. Im besonderen ist das Meßrohr dabei so ausgelegt, daß seine gestreckte Länge größer als 1500 mm ist. Dementsprechend ergibt sich zumindest für den Fall, daß das wenigstens eine Aufnehmer-Rohr 4 aus Stahl besteht, für letzteres bei den üblicherweise verwendeten Wandstärken von etwas über 1 mm eine Masse von wenigstens 10 kg. Nach einer weiteren Ausgestaltung der Erfindung ist das wenigstens eine Aufnehmer-Rohr 4 allerdings so bemessen, daß es infolge einer vergleichsweise großen Wandstärke von etwa 5 mm und/oder einer vergleichsweise großen gestreckten Länge von etwa 2000 mm eine Masse von mehr als 25 kg aufweist.

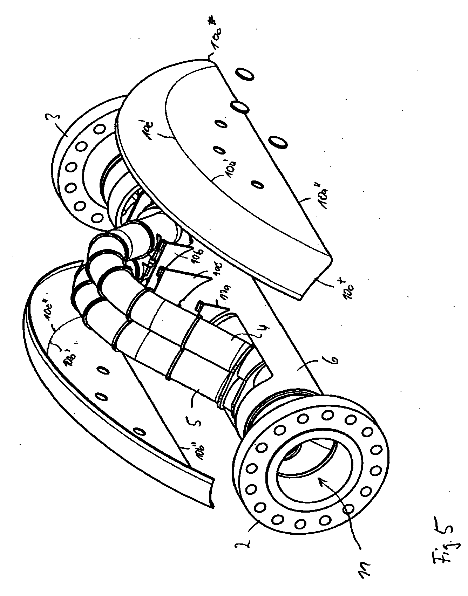

Neben dem Aufnehmer-Rohr 4 kann ferner, wie auch in den Fig. 5 und 6 gezeigt, ein, insb. ebenfalls dem Führen wenigstens eines Teilvolumens vom zu messenden Medium dienendes, insb. zum ersten Aufnehmer-Rohr 4 im wesentlichen identisches, zweites Aufnehmer-Rohr 5 im Meßaufnehmer vorgesehen sein, wobei das zweite Aufnehmer-Rohr 5 gemäß einer weiteren Ausgestaltung der Erfindung ebenfalls wenigstens ein gebogenes Rohrsegment 51 aufweist. Die beiden, insb. zumindest abschnittsweise zueinander parallel verlaufenden, Aufnehmer-Rohre können, wie in den Fig. 5, 9 und 11 angedeutet und beispielsweise auch in der US-B 67 11 958, der US-A 57 96 011, der US-A 53 01 557 gezeigt, mittels entsprechender Verteilerstücke 11, 12 jeweils einlaßseitig und auslaßseitig miteinander zu im Betrieb parallel durchströmten Strömungspfaden verbunden sein; sie können aber auch, wie z.B. in der US-A 60 44 715 gezeigt, unter Bildung hintereinander liegender Strömungspfade seriell miteinander verbunden sein. Darüber hinaus ist es aber auch möglich, wie beispielsweise auch in der US-B 66 66 098 oder der US-A 55 49 009 vorgeschlagen, lediglich eines der beiden Aufnehmer-Rohre als dem Führen von Medium dienendes Meßrohr und das andere als vom zu messenden Medium nicht durchströmtes, der Verringerung von intrinsischen Imbalancen im Meßaufnehmer dienendes Blindrohr zu verwenden.

Falls erforderlich, können allfällig oder zumindest potentiell von den vibrierenden Aufnehmer-Rohren einlaßseitig oder auslaßseitig Aufnehmer-Gehäuse verursachte mechanische Spannungen und/oder Vibrationen z.B. dadurch minimiert werden, daß die Aufnehmer-Rohre, wie bei Meßaufnehmern der beschriebenen Art üblich, einlaßseitig mittels wenigstens einer ersten Knotenplatte 217 und auslaßseitig mittels wenigstens einer zweiten Knotenplatte 218 miteinander mechanisch verbunden sind. Darüber hinaus können mittels der Knotenplatten 217, 218, sei es durch deren Dimensionierung und/oder deren Positionierung auf den beiden Aufnehmer-Rohren 4, 5 mechanische Eigenfrequenzen der beiden Aufnehmer-Rohre 4, 5 und insoweit auch mechanische Eigenfrequenzen des inneren Schwingungssystems gezielt beeinflußt werden.
In Anbetracht dessen, daß, wie bereits erwähnt, jedes der Aufnehmer-Rohre 4, 5 durchaus weit über 10 kg wiegen und dabei, wie aus den obigen Maßangaben ohne weiteres ersichtlich, ein Fassungsvermögen von 10 l oder mehr haben kann, kann das dann die beiden Aufnehmer-Rohre 4, 5 umfassende innere Schwingungssystem zumindest bei hindurchströmendem Medium mit hoher Dichte eine Gesamt-Masse von weit über 50 kg erreichen. Besonders bei der Verwendung von Aufnehmer-Rohren mit vergleichsweise großem Innen-Durchmesser, großer Wandstärke und großer gestreckte Länge kann die Masse des inneren Schwingungssystem ohne weiters aber auch größer als 70 kg oder zumindest mit hindurchströmendem Medium mehr als 90 kg betragen.

Beim gezeigten Ausführungsbeispiel werden die beiden Aufnehmer-Rohre 4, 5 zumindest teilweise im Betrieb von der daran zumindest anteilig fixierten elektro-mechanischen Erregeranordnung 60 zu auslegerartigen Vibrationen, vorzugsweise auf einer momentanen mechanischen Eigenfrequenz des mittels der beiden Aufnehmer-Rohre 4, 5 gebildeten inneren Schwingungssystems, angeregt, bei denen sie aus der oben erwähnten Ebene lateral ausgelenkt und nach Art einer Stimmgabel zueinander im wesentlichen gegenphasig schwingen gelassen werden. Anders gesagt, schwingen die Rohrsegmente 41, 51 in einem Biegeschwingungsmode nach der Art eines einseitig eingespannten Auslegers. Im gezeigten Ausführungsbeispiel weist die Erregeranordnung 60 dafür zumindest einen jeweils im Bereich der Scheitelbögen, insb. etwa jeweils mittig, an den beiden Aufnehmer-Rohren 4, 5 angeordneten Schwingungserreger auf. Bei dem Schwingungserreger kann es sich beispielsweise um einen solchen vom elektro-dynamischen Typ, also einen mittels einer am Aufnehmer-Rohr 5 fixierten Magnetspule 62 und einen darin eintauchenden, am anderen Aufnehmer-Rohr 4 entsprechend fixierten Anker 61 realisierten Schwingungserreger, handeln.

Zum Erfassen von Vibrationen des Aufnehmer-Rohrs und zum Erzeugen des wenigstens eines Schwingungen des Aufnehmer-Rohrs repräsentierenden Schwingungsmeßsignals ist ferner, wie bereits erwähnt, eine Sensoranordnung vorgesehen, mittels der in der für derartige Meßaufnehmer üblichen Weise, insb. einlaß- und auslaßseitige, Vibrationen des Rohrsegments 41 signalisiert und einer elektronischen Weiterverarbeitung zugeführt werden können. Im gezeigten Ausführungsbeispiel weist die Sensoranordnung dafür einen einlaßseitig am wenigstens einen Aufnehmer-Rohr 4 angeordneten ersten Schwingungssensor sowie einen auslaßseitig am wenigstens einen Aufnehmer-Rohr angeordneten, insb. zum ersten Schwingungssensor im wesentlichen identischen oder baugleichen, zweiten Schwingungssensor auf. Bei den Schwingungssensoren kann es sich ebenfalls um solche vom elektro-dynamischen Typ, also jeweils mittels einer am Aufnehmer-Rohr 5 fixierten Magnetspule 72, 82 und einen darin eintauchenden, am anderen Aufnehmer-Rohr 4 entsprechend fixierten Anker 71, 81 realisierten Schwingungssensor, handeln. Darüber hinaus können als Schwingungssensoren auch andere dem Fachmann bekannte, beispielsweise opto-elektronische, Schwingungssensoren verwendet werden.

Das wenigstens eine Aufnehmer-Rohr 4 des Meßaufnehmers ist, wie aus der Zusammenschau der Fign. 3a, b und 5 ohne weiteres ersichtlich und wie bei derartigen Meßaufnehmern auch üblich, vom Aufnehmer-Gehäuse 10 praktisch vollständig umhüllt. Das Aufnehmer-Gehäuse 10 dient insoweit also nicht nur als Halterung des Aufnehmer-Rohr 4, 5 sondern darüber hinaus auch dazu, die innen liegenden Bauteile des Meßaufnehmers 1, wie beispielsweise die Erreger- und die Sensoranordnung und allfällig darüber hinaus innerhalb des Aufnehmer-Gehäuse plazierte Komponenten des Meßaufnehmers, vor äußeren Umwelteinflüssen, wie z.B. Staub oder Spritzwasser, zu schützen. Überdies kann das Aufnehmer-Gehäuse 10 ferner auch so ausgeführt und so bemessen sein, daß es bei allfälligen Schäden am wenigstens einen Aufnehmer-Rohr 4, z.B. durch Rißbildung oder Bersten, ausströmendes Medium bis zu einem geforderten maximalen Überdruck im Inneren des Aufnehmer-Gehäuses möglichst vollständig zurückzuhalten kann. Als Material für das Aufnehmer-Gehäuse, insb. auch die Gehäusekappe 7, können z.B. Stähle wie Baustahl oder rostfreier Stahl, oder auch andere geeignete hochfeste Werkstoffe verwendet werden. Nach einer weiteren Ausgestaltung des Meßaufnehmers bestehen das wenigstens eine, insb. zumindest abschnittsweise gebogene, Aufnehmer-Rohr 4 und das Aufnehmer-Gehäuse aus jeweils dem gleichen Material, insb. Stahl oder Edelstahl, oder zumindest aus einander ähnlichen Materialien, insb. verschiedenen Stahlsorten. Ferner ist vorgesehen, die Flansche, wie auch in Fig. 3a, b dargestellt und wie bei derartigen Meßaufnehmer durchaus üblich, als integralen Bestandteil des Aufnehmer-Gehäuses auszubilden, um so eine möglichst kurze Einbaulänge bei möglichst hoher Stabilität des Meßaufnehmers zu erreichen; gleichermaßen können auch die ggf. vorgesehenen Verteilerstücke 11, 12 direkt in das Aufnehmer-Gehäuse integriert sein.

Das Aufnehmer-Gehäuse 10 umfaßt ein - hier als seitlich zumindest teilweise offenen Tragzylinder dargestelltes - Tragelement 6, das, wie in Fig. 3 und 4 dargestellt, mit dem wenigstens einen Aufnehmer-Rohr einlaßseitig und auslaßseitig mechanisch so verbunden ist, daß das wenigstens eine gebogene Rohrsegment 41 seitlich herausragt. Ferner weist das Aufnehmer-Gehäuse eine zumindest vom gebogenen Rohrsegment des Aufnehmer-Rohrs 4 beabstandet angeordnete und am Tragelement 6, insb. dauerhaft und/oder mediumsdicht, fixierte Gehäusekappe 7 zum Einhausen zumindest des wenigstens einen gebogenen Rohrsegments des wenigstens einen Aufnehmer-Rohrs 4. Bei dem in Fig. 3 dargestellten Ausführungsbeispiel ist das Aufnehmer-Rohr 4 im hier rohrförmigen Tragelement 6 einlaß- und auslaßseitig so gehaltert, daß das schwingfähige Rohrsegment 41, durch zwei Ausnehmungen 61, 62 des Tragelements 6 verlaufend, seitwärts aus diesem heraus- und somit in die ebenfalls am Tragelement 6 fixierte Gehäusekappe 7 hineinragt. Es sei hierbei noch erwähnt, das anstelle des in Fig. 3 und 4 eher rohrförmig dargestellten Tragelements 6 auch ein ggf. massiver Tragzylinder mit einem anderen geeigneten Querschnitt verwendet werden kann, beispielsweise auch ein eher balkenförmig ausgebildetes Tragelement.

Je nach dem, welche Form und gestreckte Länge für das wenigstens eine Aufnehmer-Rohr 4 tatsächlich gewählt wird, weist das hier im wesentlichen zylindrische Tragelement eine zur gestreckten Länge des Aufnehmer-Rohrs im wesentlichen gleiche oder eine etwas kürzere Länge auf. Demgemäß und im Hinblick auf die oben erwähnten Abmessungen des wenigstens einen Aufnehmer-Rohrs 4 hat das Tragelement nach einer Ausgestaltung des Meßaufnehmers eine Länge von ebenfalls mindestens etwa 1000 mm. Vorzugsweise ist das zylindrische Tragelement aber mit einer Länge von über 1200 mm realisiert. Ferner weist das Tragelement, insb. für den Fall, daß es aus Stahl besteht, eine Masse von wenigstens 70 kg auf. Nach einer weiteren Ausgestaltung des Meßaufnehmers ist das Tragelement allerdings so ausgebildet und so bemessen, daß seine Masse mehr als 140 kg beträgt. Dementsprechend ist der vorgeschlagene Meßaufnehmer so ausgeführt und so dimensioniert, daß ein Massenverhältnis einer Gesamt-Masse des äußeren Schwingungssystems zu einer Gesamt-Masse des inneren Schwingungssystems ohne weiteres kleiner als 3, insb. kleiner gleich 2, sein kann.

Die dem Einhausen des Rohrsegments 41 dienende Gehäusekappe 7 umfaßt, wie in Fig. 3 schematisch dargestellt, ein rinnenförmiges Kappensegment 10c sowie ein im wesentlichen ebenes erstes seitliches Gehäuse-Segment 10a und ein zu diesem im wesentlichen spiegelsymmetrisches zweites seitliches Gehäuse-Segment 10b. Die Form des Kappensegments 10c entspricht, wie aus der Zusammenschau von Fig. 3a und 3b ohne weiteres ersichtlich, im wesentlichen der einer toroidalen Schale. Dementsprechend weist das Kappensegment 10c einen im wesentlichen kreisbogenförmigen, bevorzugt halbkreisförmigen, Querschnitt von vorgebbarem Radius r auf und, zumindest virtuell, einen im wesentlichen kreisbogenförmigen ersten Segmentrand 10c' mit einem im Vergleich zum Radius r wesentlich größeren Radius R sowie einem zum ersten Segmentrand im wesentlichen identisch geformten zweiten Segmentrand 10c". Falls erforderlich, kann sowohl der Querschnitt als auch der Segmentrand nicht ideal-kreisförmig, also leicht elliptisch geformt sein. Wie aus der Zusammenschau der Fig. 1, 2 und 3 ohne weiteres ersichtlich, sind die seitlichen Gehäuse-Segmente 10a, 10b jeweils über einen kreisbogenförmigen ersten Segmentrand 10a' bzw. 10b' mit dem ersten bzw. zweiten Segmentrand 10c', 10c" des Kappensegments 10c verbunden, und zwar so, daß die seitlichen Gehäuse-Segmente 10a, 10b jeweils in einer Tangentialebene des Kappensegments 10c und somit zu einer an den zugehörigen Segmentrand 10ca bzw. 10cb anlegbaren Tangente im wesentlichen fluchtend ausgerichtet sind. Anders gesagt, zwischen dem Kappen- und dem Gehäuse-Segment 10c, 10a bzw. dem Kappen-Gehäuse-Segment 10c, 10b ist jeweils ein weitgehend stetiger, also möglichst glatter Übergang geschaffen, in dem bei zulässigem innerem Überdruck möglichst keine oder nur sehr geringe Biegespannungen erzeugt werden. Außerdem ist die Gehäusekappe 7 über einen dritten Segmentrand 10c⁺ und einen vierten Segmentrand 10c^{#} des Kappensegments 10c sowie über jeweils einen zweiten Segmentrand 10a", 10b" des ersten und zweiten seitlichen Gehäuse-Segments 10a bzw. 10b am Tragelement 6 fixiert, und zwar so, daß das Kappensegment bzw. die Gehäuse-Segmente 10c, 10a, 10b im Betrieb vom wenigstens einen vibrierenden Rohrsegment 41 beabstandet bleiben. Zur Herstellung der Gehäusekappe 7 können die Segmente 10c, 10a, 10b z.B. jeweils einzeln vorgefertigt und nachträglich zusammengefügt, insb. miteinander verschweißt werden. In vorteilhafter Weise kann bei der Herstellung der Gehäusekappe 7 z.B. auch das in der bereits erwähnten WO-A 03/021202 beschriebene Verfahren zum Herstellen einer als Gehäusekappe 7 verwendbaren Metallkappe angewendet werden, bei dem diese durch Verschweißen zweier im wesentlichen identisch geformter, insb. aus einem tellerförmigen Halbzeug ausgeschnittener, Kappenhälften mit einer, insb. viertel-torusförmigen, Randwulst gebildet wird. Ferner kann die Gehäusekappe 7 z.B. auch aus einem Metallblech von entsprechender Dicke tiefgezogen werden.

Nach einer Ausgestaltung des Meßaufnehmers ist die Gehäuse-Kappe 7 so dimensioniert, daß sie, insb. bei Verwendung von Stahl als Gehäuse-Material, eine Masse von wenigstens 10 kg, vornehmlich jedoch von mehr als 20 kg aufweist. In Anbetracht dessen, daß das Tragelement durchaus eine Masse von 70 kg oder darüber aufweisen kann, ergibt sich somit für das Aufnehmer-Gehäuse eine Masse von wenigstens 80 kg, insb. aber von mehr als 160 kg. Allerdings ist für die gesamte Masse des äußeren Schwingungssystem für den oben erwähnten Fall das Flansche und/oder Verteilerstücke im Meßaufnehmer vorgesehen und diese insoweit auch dem äußeren Schwingungssystem zugehörig sind, eine entsprechend höhere Masse zu veranschlagen und bei der Abstimmung des äußeren auf das innere Schwingungssystem entsprechend mit zu berücksichtigen. Zumindest insoweit kann also die Masse des gesamten äußeren Schwingungssystems ohne weiteres auch 200 kg oder erheblich darüber betragen. Besonders bei Verwendung von Aufnehmer-Rohren mit einem Innen-Durchmesser von über 100 mm ist für das äußere Schwingungssystem eine Masse von weit über 300 kg zu veranschlagen.

Im hier gezeigten Ausführungsbeispiel des Meßaufnehmers 1 sind, wie in Fig. 4 und 6 schematisch dargestellt, einlaßseitig und auslaßseitig am Tragelement 6 jeweils eine Transport-Öse fixiert, die dazu dienen, definierte Anschlagpunkte für allfällige Einbau-Hilfsmittel, wie z.B. entsprechende Anschlagseile oder -gurte von Hebezeugen, zu schaffen und somit eine Beschädigung des ggf. über 500 kg schweren des Meßaufnehmers, beispielsweise infolge unsachgemäßen Transports und/oder ungeeigneter Wahl der entsprechenden Anschlagpunkte, besser vermeiden zu können.

In der in den Fig. 9-10 gezeigten nicht zur Erfindung gehörigen andere Variante des Meßaufnehmers ist Tragelement 6 des Aufnehmer-Gehäuses 10 als ein Tragrahmen ausgebildet, der mit dem wenigstens einen Aufnehmer-Rohr 4 einlaßseitig und auslaßseitg mechanisch so verbunden ist, daß das wenigstens eine gebogene Rohrsegment innerhalb des Tragrahmens verläuft. Ferner umfaßt das Aufnehmer-Gehäuse 10 bei dieser Variante des Meßaufnehmers ein seitlich neben dem wenigstens einen gebogenen Rohrsegment 41 des wenigstens einen Aufnehmer-Rohrs 4 angeordnetes erstes Gehäuse-Segment, das seitlich am Tragrahmen, insb. dauerhaft und/oder mediumsdicht, fixiert ist, sowie ein seitlich neben dem wenigstens einen gebogenen Rohrsegment des wenigstens einen Aufnehmer-Rohrs angeordnetes zweites Gehäuse-Segment, das am Tragrahmen, insb. dauerhaft und/oder mediumsdicht, fixiert ist. Die beiden Gehäuse-Segmente sind dabei derart einander gegenüberliegend angeordnet, daß das wenigstens eine gebogene Rohrsegment des wenigstens einen Aufnehmer-Rohrs zumindest abschnittsweise zwischen den beiden Gehäuse-Segmenten verläuft.

Wie aus der Zusammenschau der Fig. 5 bis 7 ohne weiteres ersichtlich, sind bei dem hier für den Meßaufnehmer gezeigten Ausführungsbeispiel der Tragzylinder und die beiden Gehäuse-Segmente darüber hinaus so geformt und sind die beiden seitlichen, insb. im wesentlichen plattenförmigen, Gehäuse-Segmente jeweils so mit dem jeweilige Tragelement verbunden, daß sie zumindest abschnittsweise seitlich im wesentlichen parallel zum gebogenen Rohrsegment 41 verlaufen. Nach einer weiteren Ausgestaltung des Meßaufnehmers 1 ist, insb. für den Fall, das Stahl als Material für die Gehäuse-Segmente dient, vorgesehen, daß das das Aufnehmer-Gehäuse eine kleinste Wandstärke aufweist, die kleiner als 6 mm ist.

Wie aus den vorangehend Erläuterung unschwer entnehmbar, führt das innere Schwingungssystems des Meßaufnehmers 1, das durch das wenigstens eine Aufnehmer-Rohr 4, das zumindest darin momentan geführte Medium sowie zumindest anteilig durch die Erreger- und die Sensoranordnung 60, 70 gebildet ist, im Betrieb des Meßaufnehmers 1 zumindest zeitweise mechanische Schwingungen mit wenigstens einer Nutz-Schwingungsfrequenz Fₙ aus, wobei die mechanischen Schwingungen zumindest zeitweise und/oder zumindest anteilig als Lateral-Schwingungen, insb. als Biege-Schwingungen, ausgebildet sind. Die Nutz-Schwingungsfrequenz Fₙ ist dabei in dem Fachmann bekannter Weise sowohl von Größe, Form und Material des Aufnehmer-Rohrs 4 als auch im besonderen von einer momentanen Dichte des Mediums abhängig, und insoweit im Betrieb des Meßaufnehmers innerhalb eines vorgegebenen, eine untere und eine obere Grenzfrequenz aufweisenden Nutz-Frequenzbandes ΔFₙ veränderlich. Nach einer weiteren Ausgestaltung des Meßaufnehmers ist vorgesehen, im Betrieb desselben die momentane Nutz-Schwingungsfrequenz Fₙ des inneren Schwingungssystems so zu regeln und so einzustellen, daß sie im wesentlichen einer momentanen natürlichen Eigenfrequenz des inneren Schwingungssystems entspricht.

Wie bereits eingangs angedeutet, weist das Aufnehmer-Gehäuse 10 selbst ebenfalls eine Vielzahl von natürlichen Schwingungsmoden auf. Ferner ergibt sich aus den vorangehenden Erläuterungen, daß das Massenverhältnis der Gesamt-Masse des äußeren Schwingungssystems zu der Gesamt-Masse des inneren Schwingungssystems zumindest bei Verwendung vergleichsweise großer Aufnehmer-Rohre im Betrieb zumindest zeitweise deutlich kleiner als der eingangs diskutierte kritische Wert von 4 sein kann, wodurch potentiell auch Eigenmoden des äußeren Schwingungssystems, insb. der Gehäuse-Segmente, durchaus in der Nähe des Nutz-Frequenzbands ΔFₙ oder sogar innerhalb desselben angesiedelt sein können, für den Fall, daß das Aufnehmer-Gehäuse in herkömmlicher Weise frei schwingen gelassen würde. Zum Unterdrücken oder Auslöschen wenigstens eines natürlichen, Schwingungen des Meßrohrs potentiell und insoweit auch die Messung störenden Schwingungsmodes des Aufnehmer-Gehäuses weist der erfindungsgemäße Meßaufnehmer 10 daher ferner wenigstens ein am Aufnehmer-Gehäuse, insb. direkt, fixiertes und dem Bilden von im wesentlichen ortsfesten Schwingungsknoten im Aufnehmer-Gehäuse dienendes erstes Stützelement 13a auf, das insoweit ebenfalls dem äußeren Schwingungssystem des Meßaufnehmers zugehörig ist. Somit wird mittels des wenigstens einen Stützelement praktisch eine Sperr-Frequenzband ΔFₛ gegen potentiell schädliche Stör-Schwingungen Fₛ des äußeren Schwingungssystems geschaffen. Das wenigstens eine Stützelement 13a und das Aufnehmer-Gehäuse 10 sind dabei im besonderen so aufeinander abgestimmt, daß das Sperr-Frequenzband ΔFₛ eine Bandbreite aufweist, die zumindest mit einer vorab als Meßbereich kalibrierten und insoweit vorgegebenen Bandbereite des Nutz-Frequenzbands ΔFₙ zumindest deckungsgleich, nach Möglichkeit aber sogar etwas größer als die Bandbereite des Nutz-Frequenzbands ist. Anders gesagt, beim erfindungsgemäßen Meßaufnehmer kann der Fall, daß das äußere Schwingungssystem des Meßaufnehmers allfällig auch wenigstens einen Schwingungsmode mit einer niedrigsten natürlichen Eigenfrequenz aufweist, die kleiner als die vorgegebene untere Grenzfrequenz des Nutz-Frequenzbandes ΔFₙ ist, durchaus akzeptiert werden.

In Anbetracht dessen, daß das innere Schwingungssystem im Betrieb vorzugsweise auf einer natürlichen Eigenfrequenz schwingen gelassen wird, ist ferner sicherzustellen, daß es zumindest einen Schwingungsmode mit einer natürlichen Eigenfrequenz aufweist, die im Betrieb stets größer ist als die niedrigste natürliche Eigenfrequenz des äußeren Schwingungssystems ist. Gleichermaßen weist das innere Schwingungssystem zumindest einen Schwingungsmode mit einer natürlichen Eigenfrequenz auf, die im Betrieb stets kleiner ist als die obere Grenzfrequenz des Nutz-Frequenzbandes ΔFₙ ist. Nach einer Ausgestaltung des Meßaufnehmers sind das äußere und das innere Schwingungssystem dabei so aufeinander abgestimmt, daß das Nutz-Frequenzband ΔFₙ des inneren Schwingungssystems und dementsprechend auch das Sperr-Frequenzband ΔFₛ des äußeren Schwingungssystems jeweils eine Bandbreite von wenigstens 50 Hz aufweisen. Gemäß einer weiteren Ausgestaltung des Meßaufnehmers ist eine untere Grenzfrequenz des Sperr-Frequenzbandes daher wenigstens 5% und/oder 10 Hz kleiner gewählt als die vorgegebene untere Grenzfrequenz des Nutz-Frequenzbandes ΔFₙ. Somit ist der erfindungsgemäße Meßaufnehmer auch dafür geeignet, solche Medienströme zu messen, deren Dichte im Betrieb des Meßaufnehmers um mehr als 20 kg/m³ schwankt, wie es z.B. bei zwei- oder mehr-phasigen Medienströmen oder auch bei diskontinuierlichen Medienströmen der Fall sein kann.

Nach einer weiteren Ausgestaltung des Meßaufnehmers ist die untere Grenzfrequenz des Nutz-Frequenzbandes ΔFₙ vorzugsweise für solche Medien kalibriert und ist insoweit auch die untere Grenzfrequenz des Sperr-Frequenzbandes ΔFₛ für solche Medien eingestellt, die eine Dichte von mehr als 400 kg/m³ aufweisen. Im besonderen ist die untere Grenzfrequenz des Nutz-Frequenzbandes ΔFₙ ferner gegeben und dementsprechend die untere Grenzfrequenz des Sperr-Frequenzbandes ΔFₛ so gewählt, daß sie einer Eigenfrequenz des inneren Schwingungssystems entspricht, wenn ein Medium mit einer Dichte von kleiner oder gleich 2000 kg/m³ im wenigstens einen Aufnehmer-Rohr 4 fließt. Nach einer anderen Ausgestaltung des Meßaufnehmers 1 ist die obere Grenzfrequenz des Nutz-Frequenzbandes ΔFₙ gegeben, wenn die Dichte des Mediums im wesentlichen Null, also etwa gleich einer Dichte von Luft ist.

Es sei an dieser Stelle ferner erwähnt, daß die Nutz-Schwingungsfrequenz Fₙ des inneren Schwingungssystems bei Meßaufnehmern der beschriebenen Art üblicherweise auch von einer momentanen Viskosität des Mediums abhängig oder zumindest in Abhängigkeit davon geregelt ist. Demgemäß ist nach einer weiteren Ausgestaltung die obere Grenzfrequenz des Nutz-Frequenzbandes ΔFₙ gegeben, wenn die Viskosität des Mediums kleiner als 100·10⁻⁶ Pas, insb. etwa gleich einer Viskosität von Luft, ist. Da der Meßaufnehmer im besonderen auch für die Messung von Ölen, insb. Erdöl, vorgesehen ist, ist die untere Grenzfrequenz des Nutz-Frequenzbandes ΔFₙ nach einer weiteren Ausgestaltung für ein Medium vorgegeben, dessen Viskosität größer ist als 300·10⁻⁶ Pas. Ferner ist die untere Grenzfrequenz des Nutz-Frequenzbandes ΔFₙ nach einer weiteren Ausgestaltung des Meßaufnehmers dann gegeben, wenn die Viskosität des Mediums kleiner als 3000·10⁶ Pas ist.

Nach einer Ausgestaltung des äußeren Schwingungssystems des Meßaufnehmers 1 sind das Aufnehmer-Gehäuse 10 und das wenigstens eine Stützelemente 13a so geformt und miteinander mechanisch so verbunden, daß das äußere Schwingungssystem im Betrieb zumindest innerhalb des Nutz-Frequenzbandes ΔFₙ allenfalls nur solche unerwünschten Stör-Schwingungen ausführt, daß eine von den Stör-Schwingungen eine momentan umgesetzte Stör-Schwingungsleistung wesentlich kleiner als eine momentan von den Schwingungen des inneren Schwingungssystems bei Nutz-Schwingungsfrequenz umgesetzte Nutz-Schwingungsleistung ist. Beispielsweise kann als Stör-Schwingungsleistung ein Mittelwert aller durch Stör-Schwingungen innerhalb des Nutzfrequenzbands ΔFₙ momentan umgesetzten Schwingungsleistungen angesehen werden. Für die in der Praxis geforderte hohe Meßgenauigkeit hat es sich dabei ferner als vorteilhaft erwiesen, wenn ein entsprechendes Nutz-zu-Stör-Leistungsverhältnis der Nutz-Schwingungsleistung zur Stör-Schwingungsleistung größer als 5 zumindest aber größer als 2 ist. Als Maß für die Stör-Schwingungsleistung kann beispielsweise ein Mittelwert aller durch Stör-Schwingungen innerhalb des Nutzfrequenzbands ΔFₙ momentan umgesetzten Schwingungsleistungen dienen. Alternativ oder in Ergänzung dazu sind das Aufnehmer-Gehäuse 10 und das wenigstens eine Stützelemente 13a so geformt und miteinander mechanisch so verbunden, daß das äußere Schwingungssystem im Betrieb zumindest innerhalb des Nutz-Frequenzbandes ΔFₙ keine oder allenfalls nur solche unerwünschten Stör-Schwingungen ausführt, daß eine momentan maximale Stör-Schwingungsamplitude der Stör-Schwingungen des äußeren Schwingungssystems wesentlich kleiner als eine momentan maximale Schwingungsamplitude der Schwingungen des inneren Schwingungssystems, insb. des Aufnehmer-Rohrs 4 selbst, ist. Des weiteren können das Aufnehmer-Gehäuse 10 und das wenigstens eine Stützelemente 13a auch so geformt und miteinander so verbunden sein, daß eine momentane Stör-Schwingungsgüte der allfällig vom äußeren Schwingungssystem ausgeführten Stör-Schwingungen wesentlich kleiner als eine momentane Nutz-Schwingungsgüte der Schwingungen des inneren Schwingungssystems bei Nutz-Schwingungsfrequenz ΔFₙ ist. Nach einer weiteren Ausgestaltung der Erfindung sind das Aufnehmer-Gehäuse 10 und das wenigstens eine Stützelemente 13a so geformt und miteinander mechanisch so verbunden, daß ein Nutz-zu-Stör-Amplitudenverhältnis der momentan maximalen Schwingungsamplitude der Schwingungen des inneren Schwingungssystems zur momentan maximale Stör-Schwingungsamplitude größer als 1,5 ist, insb. aber größer als 2 ist und/oder daß ein ein Nutz-zu-Stör-Schwingungsgüte-Verhältnis der momentanen Nutz-Schwingungsgüte zur momentanen Stör-Schwingungsgüte mindestens 50:1 beträgt, insb. größer als 80 ist.

Um den wenigstens einen störenden Schwingungsmode des Aufnehmer-Gehäuses 10 möglichst wirkungsvoll zu unterdrücken, ist das wenigstens eine Stützelement zumindest punktuell in einem Bereich des Aufnehmer-Gehäuse an selbigem fixiert, in dem jener Schwingungsmode einen Schwingungsbauches, insb. einer örtlichen Schwingungsamplitude, aufweist oder zumindest aufweisen würde, wenn das Stützelement nicht am Aufnehmer-Gehäuse angebracht wäre. Bei dem hier gezeigten Ausführungsbeispiel ist das wenigstens eine Stützelement 13a mittels wenigstens einer massiven, beispielsweise ebenfalls aus Stahl bestehenden, Platte gebildet, die, wie aus den Fig. 3a, b, 4 bis 7 sowie 9 und 10 ohne weiteres ersichtlich, mit dem Aufnehmer-Gehäuse 10 an zumindest zwei einander gegenüberliegenden Fixierstellen11a, 2a, insb. zumindest teilweise wieder lösbar, verbunden ist. Vorzugsweise ist das wenigstens eine Stützelement 13a ferner zumindest punktuell mit dem Aufnehmer-Gehäuse 10 verschweißt und/oder verlötet, insb. hartverlötet. Alternativ oder in Ergänzung dazu kann das wenigstens eine Stützelement 13a zumindest punktuell mit dem Aufnehmer-Gehäuse 10, insb. mit den seitlich des Aufnehmer-Rohrs 4 verlaufenden Gehäuse-Segmenten, auch verschraubt sein.

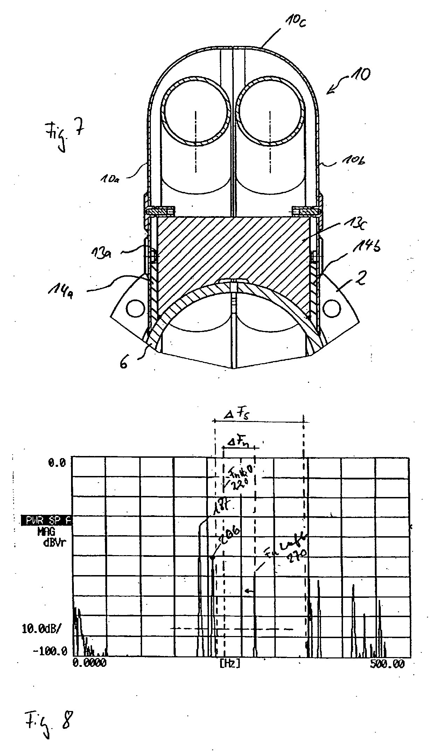

Nach einer weiteren Ausgestaltung des Meßaufnehmers ist das wenigstens eine Stützelement demgemäß, wie aus der Zusammenschau der Fign. 4 bis 7 sowie 9 und 10 ohne weiteres ersichtlich, zumindest anteilig an den seitlich des Meßrohrs verlaufenden Gehäuse-Segmenten des Aufnehmer-Gehäuses 10 mittels eines Bolzen sowie einer darauf geschraubter und/oder damit verschweißter Scheibe fixiert, die das Gehäuse-Segment möglichst spaltfrei gegen das Stützelement gedrückt hält, ggf. unter Zwischenlage von Feder- und/oder Dämpfungsscheiben. Wie auch in Fig. 7 exemplarisch dargestellt, kann darüber hinaus das wenigstens eine Stützelement 13a ferner zumindest anteilig auch am Tragelement - hier dem Tragzylinder - fixiert sein, z.B. mittels Schweiß - oder Lötverbindung. Anstelle solcher stoffschlüssiger Verbindung oder in Ergänzung dazu können, falls erforderlich, selbstverständlich auch entsprechende Schraubverbindungen zum Fixieren des Stützelements 13a am Tragelement dienen.

Nach einer Weiterbildung des Meßaufnehmers der Erfindung ist ferner wenigstens eine an das Aufnehmer-Gehäuse 10 gekoppelte, insb. sich zumindest abschnittsweise zwischen dem wenigstens einen Stützelement und Aufnehmer-Gehäuses erstreckende, erste schwingungsdämpfende - hier allfällige Schwingungen des Aufnehmer-Gehäuses 10 dämpfende - Einlage 14a vorgesehen. Die Einlage 14a kann z.B. aus einem Kunststoff, einem Gummi, einem Silikon oder dergleichen bestehen und beispielsweise als ein Streifen oder eine Matte ausgebildet sein. Nach einer Ausgestaltung dieser Weiterbildung der Erfindung ist die Einlage 14a so geformt und so im Meßaufnehmer angeordnet, daß sie sich zumindest abschnittsweise zwischen dem wenigstens einen Stützelement 13a und dem Aufnehmer-Gehäuse 10 erstreckt. Für den oben beschriebenen Fall, daß das Aufnehmer-Gehäuse den Tragzylinder 6 aufweist, kann die Einlage 14, alternativ oder in Ergänzung zur vorangehenden Ausgestaltung - auch so im Meßaufnehmer angeordnet sein, daß sie sich zumindest abschnittsweise entlang des Tragzylinders 6 erstreckt und dabei auch flächig berührt. darüber hinaus können noch weitere gleichartige, innen am Aufnehmer-Gehäuse angeordnete schwingungsdämpfende Einlagen 14b im Meßaufnehmer eingesetzt werden.

Nach einer anderen Weiterbildung des Meßaufnehmers 1 ist ferner wenigstens ein ebenfalls am Aufnehmer-Gehäuse 10 fixiertes, dem Bilden von im wesentlichen ortsfesten Schwingungsknoten im Aufnehmer-Gehäuse 10 dienendes zweites Stützelement 13b vorgesehen, wobei das äußere Schwingungssystem des Meßaufnehmers 1 bei dieser Weiterbildung insoweit zumindest auch das zweite Stützelement 13b mit umfaßt. Nach einer Ausgestaltung dieser Weiterbildung des Meßaufnehmers sind das erste Stützelement 13a und das, insb. ebenfalls direkt am Aufnehmer-Gehäuse 10 fixierte, zweite Stützelement 13b im wesentlichen zueinander identisch ausgebildet. Ferner sind bei dieser Weiterbildung des Meßaufnehmers das erste Stützelement 13a zumindest anteilig in der Nähe des ersten Schwingungssensors 71, 72 und das zweite Stützelement 13b zumindest anteilig in der Nähe des zweiten Schwingungssensors 81, 82 am Aufnehmer-Gehäuse 10 fixiert. Nach einer weiteren Ausgestaltung dieser Weiterbildung des Meßaufnehmers umfaßt dieser weiters ein ebenfalls am Aufnehmer-Gehäuse, insb. direkt, fixiertes, ebenfalls dem Bilden von im wesentlichen ortsfesten Schwingungsknoten im Aufnehmer-Gehäuse dienendes drittes Stützelement 13c, wobei das äußere Schwingungssystem des Meßaufnehmers insoweit zumindest auch das dritte Stützelement mit umfaßt. Wie aus der Fig. 4 ersichtlich, ist das dritte Stützelement beim hier gezeigten Ausführungsbeispiel zumindest anteilig in der Nähe des Schwingungserregers am Aufnehmer-Gehäuse 10, hier am zylindrischen Tragelement 6, fixiert.

Untersuchungen haben gezeigt, daß bereits mittels weniger solcher Stützelemente auf sehr einfache Weise ein Sperr-Frequenzband für das äußere Schwingungssystem geschaffen werden kann, das den Betrieb des inneren Schwingungssystems in einem Nutz-Frequenzband von ausreichend großer Bandbreite ermöglicht. Beispielsweise konnte für ein äußeres Schwingungssystem eines erfindungsgemäß realisierten Meßaufnehmers mit drei Stützelementen, das in Fig. 8 exemplarisch gezeigte Frequenzspektrum experimentell ermittelt werden. Deutlich erkennbar ist, daß das äußere Schwingungssystem zwischen etwa 210 Hz und weit über 270 Hz praktisch keinen natürlichen Schwingungsmoden aufweist, wobei bei selbigem Meßaufnehmer das Nutz-Frequenzband wiederum zwischen etwa 210 Hz und 270 Hz liegt. Ferner hat sich gezeigt, daß sowohl die Bandbreite des Sperr-Frequenzbandes als auch dessen Lage im Frequenzspektrum durch geringfügige Änderungen der Form und/oder der Position der Stützelemente ohne weiteres an das tatsächlich im Betrieb des Meßaufnehmers zu erwartende Nutz-Frequenzband angepaßt werden kann. Durch die Verwendung der Stützelemente ist es somit auch möglich, Meßaufnehmer der beschriebenen Art auch mit größeren Nennweiten von 250 mm oder darüber einerseits auch mit einer Meßgenauigkeit von über 99,8% kostengünstig herzustellen und andererseits die EinbauMaße wie auch die Einbau-Masse solcher Meßaufnehmer soweit in Grenzen zu halten, daß trotz großer Nennweite der Transport, der Einbau wie auch der Betrieb immer noch wirtschaftlich sinnvoll erfolgen kann.

## Patentansprüche

1. Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, welcher Meßaufnehmer umfaßt:
- ein Aufnehmer-Gehäuse (10), das eine Vielzahl von natürlichen Schwingungsmoden aufweist,
- wenigstens ein im Aufnehmer-Gehäuse (10) schwingfähig gehaltertes und zumindest zeitweise vibrierendes erstes Aufnehmer-Rohr (4) zum Führen wenigstens eines Teilvolumens des zu messenden Mediums,
- eine auf das wenigstens eine Aufnehmer-Rohr einwirkende elektro-mechanische, insb. elektrodynamische, Erregeranordnung (60) zum Erzeugen und/oder Aufrechterhalten von mechanischen Schwingungen des wenigstens einen Aufnehmer-Rohrs (4),
- eine auf Bewegungen des Aufnehmer-Rohrs (4), insb. Biege-Schwingungen, reagierende Sensoranordnung zum Erzeugen wenigstens eines Schwingungen des Aufnehmer-Rohrs (4) repräsentierenden Schwingungsmeßsignals (s_{vb}) sowie
- wenigstens ein am Aufnehmer-Gehäuse (10), insb. direkt, fixiertes, dem Bilden von im wesentlichen ortsfesten Schwingungsknoten im Aufnehmer-Gehäuse (10) dienendes erstes Stützelement (13a) zum Unterdrücken oder Auslöschen wenigstens eines natürlichen Schwingungsmodes des Aufnehmer-Gehäuses (10);
- wobei das wenigstens eine Aufnehmer-Rohr (4) wenigstens ein im wesentlichen U- oder V-förmig gebogenes Rohrsegment (41) aufweist,
- wobei das Aufnehmer-Gehäuse (10) ein im wesentlichen zylindrisch geformtes, insb. aus Stahl bestehendes, Tragelement (6), das mit dem wenigstens einen Aufnehmer-Rohr (4) einlaßseitig und auslaßseitig mechanisch verbunden ist, sowie eine vom wenigstens einen Aufnehmer-Rohr (4) beabstandet angeordnete und am Tragelement (6), insb. dauerhaft und/oder mediumsdicht, fixierte Gehäusekappe (7) zum Einhausen zumindest des wenigstens einen gebogenen Rohrsegments des Aufnehmer-Rohrs aufweist,
- und wobei das wenigstens eine Stützelement (13a) zumindest anteilig am zylindrischen Tragelement (6) sowie zumindest anteilig an der Gehäuse-Kappe (7) fixiert ist;
- wobei das Tragelement (6) als seitlich zumindest teilweise offener, insb. rohrförmiger, Tragzylinder ausgebildet ist, der mit dem wenigstens einen Aufnehmer-Rohr (4) so verbunden ist, daß das wenigstens eine gebogene Rohrsegment (41) seitlich aus dem Tragzylinder herausragt,
- wobei die Gehäuse-Kappe (7) seitlich neben dem wenigstens einen gebogenen Rohrsegment (41) des wenigstens einen Aufnehmer-Rohrs (4) angeordnete, insb. zumindest abschnittsweise im wesentlichen parallel zum gebogenen Rohrsegment (41) verlaufende und/oder im wesentlichen plattenförmige, Gehäuse-Segmente (10a, 10b) aufweist,
- und wobei das wenigstens eine Stützelement (13a, 13b) zumindest anteilig an den Gehäuse-Segmenten fixiert ist;
- wobei durch das Aufnehmer-Gehäuse und zumindest das wenigstens eine Stützelement ein äußeres Schwingungssystem des Meßaufnehmers und durch das wenigstens eine Aufnehmer-Rohr (4), das zumindest darin momentan geführte Medium sowie zumindest anteilig durch die Erreger- und die Sensoranordnung (60, 70) ein inneres Schwingungssystems des Meßaufnehmers gebildet sind, und
- und wobei das innere Schwingungssystems, angetrieben von der Erregeranordnung (60), im Betrieb des Meßaufnehmers zumindest zeitweise, insb. als Lateral-Schwingungen ausgebildete, mechanische Schwingungen mit wenigstens einer Nutz-Schwingungsfrequenz (Fₙ) ausführt,
-- die sowohl von Größe, Form und Material des Aufnehmer-Rohrs (4) als auch von einer momentanen Dichte des Mediums abhängig ist, und
-- die im Betrieb des Meßaufnehmers innerhalb eines vorgegebenen, eine untere und eine obere Grenzfrequenz aufweisenden Nutz-Frequenzbandes (ΔFₙ) veränderlich ist.

2. Meßaufnehmer nach Anspruch 1, wobei das Aufnehmer-Gehäuse (10) und das wenigstens eine Stützelement (13a) so geformt und miteinander mechanisch so verbunden sind, daß das zumindest dadurch gebildete äußere Schwingungssystem des Meßaufnehmers, trotz der Schwingungen des Aufnehmer-Rohrs (4), zumindest innerhalb des Nutz-Frequenzbandes (ΔFₙ) keine oder allenfalls nur solche unerwünschten Stör-Schwingungen ausführt, von denen eine momentan umgesetzte Stör-Schwingungsleistung wesentlich kleiner als eine momentan von den Schwingungen des inneren Schwingungssystems bei Nutz-Schwingungsfrequenz (Fₙ) umgesetzte Nutz-Schwingungsleistung ist.

3. Meßaufnehmer nach dem vorherigen Anspruch,
- wobei ein Nutz-zu-Stör-Leistungsverhältnis der Nutz-Schwingungsleistung zur Stör-Schwingungsleistung zumindest größer als 2, insb. größer als 5, ist und/oder
- wobei die Stör-Schwingungsleistung einem Mittelwert aller durch Stör-Schwingungen innerhalb des Nutzfrequenzbands (ΔFₙ) momentan umgesetzten Schwingungsleistungen entspricht.

4. Meßaufnehmer nach einem der vorherigen Ansprüche, wobei das Aufnehmer-Gehäuse (10) und das wenigstens eine Stützelement (13a) so geformt und miteinander mechanisch so verbunden sind, daß das zumindest dadurch gebildete äußere Schwingungssystem des Meßaufnehmers, trotz der Schwingungen des Aufnehmer-Rohrs (4), zumindest innerhalb des Nutz-Frequenzbandes (ΔFₙ) keine oder allenfalls nur solche unerwünschten Stör-Schwingungen ausführt, von denen eine momentan maximale Stör-Schwingungsamplitude wesentlich kleiner als eine momentan maximale Schwingungsamplitude der Schwingungen des inneren Schwingungssystems, insb. des wenigstens einen Aufnehmer-Rohrs (4) selbst, ist.

5. Meßaufnehmer nach dem vorherigen Anspruch, wobei ein Nutz-zu-Stör-Amplitudenverhältnis der momentan maximalen Schwingungsamplitude der Schwingungen des inneren Schwingungssystems zur momentan maximalen Stör-Schwingungsamplitude größer als 1,5 ist, insb. größer als 2 ist.

6. Meßaufnehmer nach einem der vorherigen Ansprüche, wobei das Aufnehmer-Gehäuse (10) und das wenigstens eine Stützelement (13a) so geformt und miteinander mechanisch so verbunden sind, daß das zumindest dadurch gebildete äußere Schwingungssystem des Meßaufnehmers, trotz der Schwingungen des Aufnehmer-Rohrs (4), zumindest innerhalb des Nutz-Frequenzbandes (ΔFₙ) keine oder allenfalls nur solche unerwünschten Stör-Schwingungen ausführt, von denen eine momentane Stör-Schwingungsgüte wesentlich kleiner als eine momentane Nutz-Schwingungsgüte der Schwingungen des inneren Schwingungssystems bei Nutz-Schwingungsfrequenz (Fₙ) ist.

7. Meßaufnehmer nach dem vorherigen Anspruch, wobei ein Nutz-zu-Stör-Schwingungsgüte-Verhältnis der momentanen Nutz-Schwingungsgüte zur momentanen Stör-Schwingungsgüte mindestens 50:1 beträgt, insb. größer als 80 ist.

8. Meßaufnehmer nach einem der vorherigen Ansprüche, wobei das Tragelement (6) eine Masse von wenigstens 70 kg, insb. von mehr als 140 kg, und/oder eine Länge von wenigstens 1000 mm, insb. von mehr als 1200 mm, aufweist

9. Meßaufnehmer nach einem der vorherigen Ansprüche,
- wobei das Tragelement (6) als seitlich zumindest teilweise offener, insb. rohrförmiger, Tragzylinder ausgebildet ist, der eine Masse von wenigstens 70 kg, insb. von mehr als 140 kg, aufweist, und/oder
- wobei die Gehäuse-Kappe eine Masse von wenigstens 10 kg, insb. von mehr als 20 kg, aufweist.

10. Meßaufnehmer nach einem der vorherigen Ansprüche, wobei wenigstens zwei Gehäuse-Segmente (10a, 10b) derart einander gegenüberliegend angeordnet sind, daß das wenigstens eine gebogene Rohrsegment (41) des wenigstens einen Aufnehmer-Rohrs zumindest abschnittsweise zwischen den beiden Gehäuse-Segmenten (10a, 10b) verläuft.

11. Meßaufnehmer nach einem der vorherigen Ansprüche, wobei die Gehäuse-Kappe (7) umfaßt:
- ein rinnenförmiges Kappensegment (10c)
-- mit einem kreisbogenförmigen ersten Segmentrand (10c') von vorgebbarem Radius (R) und
-- mit einem zum ersten Segmentrand (10c') im wesentlichen identisch geformten zweiten Segmentrand (10c"),
-- wobei das Kappensegment (10c) einen kreisbogenförmigen Querschnitt mit einem Radius (r) aufweist, der kleiner als der Radius R des ersten Segmentrands (10c') ist,
- ein im wesentlichen ebenes erstes seitliches Gehäuse-Segment (10a), das über einen kreisbogenförmigen ersten Segmentrand (10a') mit dem ersten Segmentrand (10c') des Kappensegments (10c) verbunden ist, sowie
- ein zum ersten seitlichen Gehäuse-Segment (10a) im wesentlichen spiegelsymmetrisches zweites seitliches Gehäuse-Segment (10b), das über einen kreisbogenförmigen ersten Segmentrand (10b') mit dem zweiten Segmentrand (10c") des ersten Gehäuse-Segments (10c) verbunden ist.

12. Meßaufnehmer nach dem vorherigen Anspruch, wobei dem das erste und zweite seitliche Gehäuse-Segment (10a, 10b) jeweils in einer Tangentialebene des Kappensegments (10c) liegen.

13. Meßaufnehmer nach einem der Ansprüche 11 bis 14,
- wobei das wenigstens eine Stützelement mittels wenigstens einer massiven Platte gebildet ist, die mit dem Aufnehmer-Gehäuse an zumindest zwei einander gegenüberliegenden Fixierstellen, insb. mittels Bolzen und/oder zumindest teilweise wieder lösbar, verbunden ist, und/oder
- wobei das wenigstens eine Stützelement (13a) mittels wenigstens einer massiven Platte gebildet ist, die zumindest punktuell, insb. zumindest teilweise wieder lösbar und/oder zumindest punktuell stoffschlüssig, sowohl an der Gehäusekappe (7) als auch am zylindrischen Tragelement (6) fixiert ist.

14. Meßaufnehmer nach einem der vorherigen Ansprüche,
- welcher Meßaufnehmer weiters wenigstens eine an das Aufnehmer-Gehäuse 810) gekoppelte, insb. sich zumindest abschnittsweise zwischen dem wenigstens einen Stützelement (13a) und Aufnehmer-Gehäuses (10) erstreckende, schwingungsdämpfende, insb. aus einem Kunststoff, einem Gummi, einem Silikon oder dergleichen bestehende, Einlage (14a, 14b) umfaßt, und/oder
- welcher Meßaufnehmer zum Anschließen des Meßaufnehmers an die Rohrleitung weiters einen, insb. eine Masse von mehr als 50 kg aufweisenden, einlaßseitigen ersten Anschlußflansch (2) sowie einen, insb. eine Masse von mehr als 50 kg aufweisenden, auslaßseitigen zweiten Anschlußflansch (3) umfaßt, wobei das äußere Schwingungssystem des Meßaufnehmers (10) insoweit zumindest auch den ersten und den zweiten Anschlußflansch (2, 3) mit umfaßt.

15. Meßaufnehmer nach einem der vorherigen Ansprüche, der weiters ein ebenfalls am Aufnehmer-Gehäuse (10), insb. direkt, fixiertes, insb. zum ersten Stützelement (13a) im wesentlichen identisches, zweites Stützelement (13b) zum Bilden von im wesentlichen ortsfesten Schwingungsknoten im Aufnehmer-Gehäuse (10) umfaßt, wobei das äußere Schwingungssystem des Meßaufnehmers insoweit zumindest auch das zweite Stützelement (13b) mit umfaßt.

16. Meßaufnehmer nach dem vorherigen Anspruch,
- wobei die Sensoranordnung (70) einen, insb. einlaßseitig am wenigstens einen Aufnehmer-Rohr (4) angeordneten, ersten Schwingungssensor (71, 72) sowie einen, insb. auslaßseitig am wenigstens einen Aufnehmer-Rohr (4) angeordneten, zweiten Schwingungssensor (81, 82) umfaßt, und
- wobei das erste Stützelement (13a) zumindest anteilig in der Nähe des ersten Schwingungssensors (71, 72) und das zweite Stützelement (13b) zumindest anteilig in der Nähe des zweiten Schwingungssensors (81, 82) am Aufnehmer-Gehäuse fixiert sind.

17. Meßaufnehmer nach Anspruch 21 oder 22, der weiters ein ebenfalls am Aufnehmer-Gehäuse (10), insb. direkt, fixiertes drittes Stützelement (13c) zum Bilden von im wesentlichen ortsfesten Schwingungsknoten im Aufnehmer-Gehäuse (10) umfaßt, wobei das äußere Schwingungssystem des Meßaufnehmers insoweit zumindest auch das dritte Stützelement (13c) mit umfaßt.

18. Meßaufnehmer nach dem vorherigen Anspruch,
- wobei die Erregeranordnung (70) zumindest einen, insb. mittig am wenigstens einen Aufnehmer-Rohr angeordneten, Schwingungserreger (61, 62) umfaßt, und
- wobei das dritte Stützelement (13c) zumindest anteilig in der Nähe des Schwingungserregers (61, 62) am Aufnehmer-Gehäuse (10) fixiert ist.

19. Meßaufnehmer nach einem der Ansprüche 1 bis 22,
- wobei die Sensoranordnung (70) einen, insb. einlaßseitig am wenigstens einen Aufnehmer-Rohr (4) angeordneten, ersten Schwingungssensor (71, 72) sowie einen, insb. auslaßseitig am wenigstens einen Aufnehmer-Rohr (4) angeordneten, zweiten Schwingungssensor (81,82) umfaßt, und/oder
- wobei die Erregeranordnung (60) zumindest einen, insb. mittig am wenigstens einen Aufnehmer-Rohr (4) angeordneten, Schwingungserreger (61, 62) umfaßt.

20. Meßaufnehmer nach einem der vorherigen Ansprüche, der weiters ein, zum ersten Aufnehmer-Rohr (4) im wesentlichen identisches und/oder im wesentlichen parallel verlaufendes, zweites Aufnehmer-Rohr (5) umfaßt.

21. Meßaufnehmer nach dem vorherigen Anspruch,
- der weiters wenigstens eine das erste und das zweite Aufnehmer-Rohr (4, 5) einlaßseitig miteinander verbindende erste Knotenplatte sowie wenigstens eine das erste und das zweite Aufnehmer-Rohr (4, 5) auslaßseitig miteinander verbindende zweite Knotenplatte (218) umfaßt, wobei das innere Schwingungssystem des Meßaufnehmers insoweit zumindest auch die erste und die zweite Knotenplatte (217, 218) mit umfaßt, und/oder
- der weiters ein das erste und das zweite Aufnehmer-Rohr (4, 5) einlaßseitig miteinander verbindendes, insb. eine Masse von mehr als 10 kg aufweisendes, erstes Verteilerstück (11) sowie ein das erste und das zweite Aufnehmer-Rohr (4, 5) auslaßseitig miteinander verbindendes, insb. eine Masse von mehr als 10 kg aufweisendes, zweites Verteilerstück (12) umfaßt, wobei das äußere Schwingungssystem des Meßaufnehmers insoweit zumindest auch das erste und das zweite Verteilerstück (11, 12) mit umfaßt.

22. Meßaufnehmer nach einem der vorherigen Ansprüche,
- wobei das äußere Schwingungssystem zumindest einen Schwingungsmode mit einer natürlichen Eigenfrequenz aufweist, die kleiner ist als die obere Grenzfrequenz des Nutz-Frequenzbandes (ΔFₙ) und die die größer ist als die untere Grenzfrequenz des Nutz-Frequenzbandes (ΔFₙ) ist, und/oder
- wobei die obere Grenzfrequenz des Nutz-Frequenzbandes (ΔFₙ) gegeben ist, wenn die Dichte des Mediums im wesentlichen Null, insb. etwa gleich einer Dichte von Luft, ist, und/oder
- wobei die momentane Nutz-Schwingungsfrequenz (Fₙ) im wesentlichen einer momentanen natürlichen Eigenfrequenz des inneren Schwingungssystems entspricht, und/oder
- wobei das Nutzfrequenzband (ΔFₙ) eine Bandbreite von wenigstens 20 Hz, insb. von mehr als 50 Hz, aufweist.

23. Meßaufnehmer nach einem der vorherigen Ansprüche, wobei das das äußere Schwingungssystem des Meßaufnehmers wenigstens einen Schwingungsmode mit einer niedrigsten natürlichen Eigenfrequenz aufweist, die kleiner als die untere Grenzfrequenz des Nutz-Frequenzbandes (ΔFₙ) ist.

24. Meßaufnehmer nach dem vorherigen Anspruch, wobei das innere Schwingungssystem zumindest einen Schwingungsmode mit einer natürlichen Eigenfrequenz aufweist, die im Betrieb stets größer ist als die niedrigste natürliche Eigenfrequenz des äußeren Schwingungssystems ist.

25. Meßaufnehmer nach einem der vorherigen Ansprüche,
- wobei die untere Grenzfrequenz des Nutz-Frequenzbandes (ΔFₙ) gegeben ist, wenn die Dichte des Mediums größer ist als 400 kg/m³, und/oder
- wobei die untere Grenzfrequenz des Nutz-Frequenzbandes (ΔFₙ) gegeben ist, wenn die Dichte des Mediums kleiner ist als 2000 kg/m³.

26. Meßaufnehmer nach einem der vorherigen Ansprüche, wobei die wenigstens eine Nutz-Schwingungsfrequenz (Fₙ) in erheblichem Maße auch von einer momentanen Viskosität des Mediums abhängig ist.

27. Meßaufnehmer nach dem vorherigen Anspruch,
- wobei die obere Grenzfrequenz des Nutzfrequenzbandes (ΔFₙ) gegeben ist, wenn die Viskosität des Mediums kleiner als 100·10⁻⁶ Pas, insb. etwa gleich einer Viskosität von Luft, ist, und/oder
- wobei die untere Grenzfrequenz des Nutzfrequenzbandes (ΔFₙ) gegeben ist, wenn die Viskosität des Mediums größer ist als 300·10⁻⁶ Pas, und/oder
- wobei die untere Grenzfrequenz des Nutzfrequenzbandes (ΔFₙ) gegeben ist, wenn die Viskosität des Mediums kleiner ist als 3000·10⁻⁶ Pas.

28. Meßaufnehmer nach einem der vorherigen Ansprüche,
- wobei das wenigstens eine Aufnehmer-Rohr (4) und das Aufnehmer-Gehäuse (10) zumindest anteilig aus Stahl, insb. Edelstahl, bestehen, und/oder
- wobei das wenigstens eine Aufnehmer-Rohr (4) eine Masse von wenigstens 10 kg, insb. von größer als 25 kg, aufweist, und/oder
- wobei das Aufnehmer-Rohr (4) einen Innen-Durchmesser aufweist, der wenigstens 80 mm beträgt, insb. größer als 100 mm ist, und/oder
- wobei das Aufnehmer-Rohr (4) eine gestreckte Länge aufweist, die wenigstens 1000 mm beträgt, insb. größer als 1500 mm ist, und/oder
- wobei das Aufnehmer-Gehäuse (10) eine Masse von wenigstens 80 kg, insb. von mehr als 160 kg, aufweist, und/oder
- wobei das Aufnehmer-Gehäuse (10) eine kleinste Wandstärke aufweist, die kleiner als 6 mm ist, und/oder
- wobei eine Gesamt-Masse des inneren Schwingungssystems wenigstens 70 kg beträgt, insb. im Betrieb zumindest zeitweise größer als 90 kg ist, und/oder
- wobei eine Gesamt-Masse des äußeren Schwingungssystems wenigstens 200 kg beträgt, insb. größer als 300 kg ist, und/oder
- wobei ein Massenverhältnis einer Gesamt-Masse des äußeren Schwingungssystems zu einer Gesamt-Masse des inneren Schwingungssystems im Betrieb zumindest zeitweise, insb. dauerhaft, kleiner als 3, insb. kleiner als 2,5, ist, und/oder
- wobei ein Einbau-Masse-zu-Nennweite-Verhältnis einer Einbau-Masse des gesamten Meßaufnehmers zu einer nominellen Nennweite des Meßaufnehmers, die einem Kaliber der Rohrleitung, in deren Verlauf der Meßaufnehmer einzusetzen ist, entspricht, wenigstens 1,5 kg/mm beträgt, insb. größer als 2 kg/mm ist, und/oder
- wobei die Einbau-Masse des gesamten Meßaufnehmers größer als 200 kg, insb. größer als 400 kg, ist, und/oder
- wobei das wenigstens eine Stützelement (13a) eine Masse von wenigstens 3 kg aufweist, und/oder
- wobei das wenigstens eine Stützelement (13a) zumindest punktuell mit dem Aufnehmer-Gehäuse (10) verschweißt und/oder verlötet, insb. hartverlötet, ist, und/oder
- wobei das wenigstens eine Stützelement (13a) zumindest punktuell mit dem Aufnehmer-Gehäuse (10) verschraubt ist, und/oder
- wobei das wenigstens eine Stützelement (13a) zumindest punktuell im Bereich eines Schwingungsbauches, insb. einer örtlichen Schwingungsamplitude, eines natürlichen Schwingungsmodes des Aufnehmer-Gehäuses (10) an selbigem fixiert ist

29. Verwendung des Meßaufnehmers nach einem der vorherigen Ansprüche zum Messen eines strömungsfähigen Mediums, das in einer Rohrleitung geführt ist, die ein Kaliber von größer 150 mm, insb. von 250 mm oder darüber, aufweist und/oder zum Messen eines Massendurchflusses von einem durch eine Rohrleitung strömenden Medium, der zumindest zeitweise größer als 900 t/h ist, insb. zumindest zeitweise mehr als 1200 t/h beträgt.

## Claims

1. Vibronic-type sensor for measuring a medium, which is able to flow, and which is conducted in a pipe, particularly a gas, a liquid, a powder or another substance which is able to flow, said sensor comprising:
- a sensor housing (10), which has many natural vibration modes
- at least a first sensor tube (4) supported in the sensor housing (10) in a manner in which it is capable of vibration and vibrating at least temporarily, said sensor tube designed to conduct at least a partial volume of the medium to be measured,
- an electromechanical, particularly an electrodynamic, exciter arrangement (60), which acts on the at least one sensor tube, designed to generate and/or maintain mechanical vibrations of the at least one sensor tube (4),
- a sensor arrangement which reacts to movements, particularly flexural vibrations, of the sensor tube (4), said sensor arrangement designed to generate at least one oscillation measuring signal (s_{vb}) representing vibrations of the sensor tube (4), and
- at least a first support element (13a) fixed, particularly directly, on the sensor housing (10), serving the formation of essentially fixed vibration nodes in the sensor housing (10), said element being designed to suppress or eliminate at least one natural mode of vibration of the sensor housing (10),
- wherein the at least one sensor tube (4) has at least one curved pipe segment (41) that is essentially U-shaped or V-shaped,
- wherein the sensor housing (10) has a support element (6) which is essentially cylindrical in shape, and particularly made of steel, said element being mechanically connected on the inlet and outside side with the at least one sensor tube (4), and a housing cap (7) which is arranged at a distance from the at least one sensor tube (4) and is fixed on the support element (6), particularly in a permanent and/or medium-tight manner, said cap designed to at least accommodate the at least one curved tube segment of the sensor tube,
- and wherein the at least one support element (13a) is fixed at least partially on the cylindrical support element (6) and at least partially on the housing cap (7),
- wherein the support element (6) is designed as a support cylinder, particularly tubular, at least partially open at the side, said element being at least connected to the at least one sensor tube (4) in such a way that the at least one curved tube segment (41) projects laterally out of the support cylinder,
- wherein the housing cap (7) has housing segments (10a, 10b) arranged laterally next to the at least one curved tube segment (41) of the at least one sensor tube (4), particularly arranged at least in sections in an essentially parallel manner to the curved tube segment (41) and/or essentially plate-shaped,
- and wherein the at least one support element (13a, 13b) is fixed at least partially on the housing segments,
- wherein an outer sensor vibration system is formed by the sensor housing and at least by the at least one support element, and wherein an inner sensor vibration system is formed by the at least one sensor tube (4), the medium at least currently conducted in the tube and at least partially by the exciter and sensor arrangement (60, 70),
- and wherein, when the sensor is in operation, the inner vibration system, driven by the exciter arrangement (60), at least temporarily executes mechanical vibrations, particularly in the form of lateral vibrations, with at least a useful vibration frequency (Fₙ),
-- which depends on both the size, shape and material of the sensor tube (4) and on a current density of the medium, and
-- which can vary within a specified useful frequency range (ΔFₙ), which has a lower and an upper limit frequency, when the sensor is in operation.

2. Sensor as claimed in Claim 1, wherein the sensor housing (10) and the at least one support element (13a) are shaped and mechanically interconnected in such a way that - despite the vibrations of the sensor tube - the at least outer vibration system of the sensor formed in this way does not execute vibrations, or at most only executes undesired interference vibrations, at least within the useful frequency range (ΔFₙ), wherein an interference vibration power currently generated by said interference vibrations is far smaller than a useful vibration power currently generated by the vibrations of the inner vibration system at the useful vibration frequency (Fₙ).

3. Sensor as claimed in the previous claim,
- wherein a "useful-to-interference-power" ratio of the useful vibration power to the interference vibration power is at least greater than 2, particularly greater than 5, and/or
- wherein the interference vibration power corresponds to a median of all the vibration powers currently generated by interference vibrations within the useful frequency range (ΔFₙ).

4. Sensor as claimed in one of the previous claims, wherein the sensor housing (10) and the at least one support element (13a) are shaped and mechanically interconnected in such a way that - despite the vibrations of the sensor tube (4) - the at least outer vibration system of the sensor formed in this way does not execute vibrations, or at most only executes undesired interference vibrations, within the useful frequency range (ΔFₙ), wherein a current maximum interference vibration amplitude of said interference vibrations is far smaller than a current maximum vibration amplitude of the vibrations of the inner vibration system, particularly of the at least one sensor tube (4).

5. Sensor as claimed in the previous claim, wherein a "useful-to-interference-amplitude" ratio of the current maximum vibration amplitudes of the vibrations of the inner vibration system to the current maximum interference vibration amplitude is greater than 1.5, particularly greater than 2.

6. Sensor as claimed in one of the previous claims, wherein the sensor housing (10) and the at least one support element (13a) are shaped and mechanically interconnected in such a way that - despite the vibrations of the sensor tube (4) - the at least external vibration system of the sensor formed in this way does not execute vibrations, or at most only executes undesired interference vibrations, within the useful frequency range (ΔFₙ), wherein a current interference vibration quality of said interference vibrations is far smaller than a current useful vibration quality of the vibrations of the inner vibration system at the useful vibration frequency (Fₙ).

7. Sensor as claimed in the previous claim, wherein a "useful-to-interference-vibration-quality" ratio of the current useful vibration quality to the current interference vibration quality is at least 50:1, particularly greater than 80.

8. Sensor as claimed in one of the previous claims, wherein the support element (6) has a mass of at least 70 kg, particularly of more than 140 kg, and/or a length of at least 1000 mm, particularly of more than 1200 mm.

9. Sensor as claimed in one of the previous claims,
- wherein the support element (6) is designed as a support cylinder, particularly tubular, and at least partially open at the side, having a mass of at least 70 kg, particularly a mass of more than 140 kg, and/or
- wherein the housing cap has a mass of at least 10 kg, particularly of more than 20 kg.

10. Sensor as claimed in one of the previous claims, wherein at least two housing segments (10a, 10b) are arranged opposite one another in such a way that the at least one curved tube segment (41) of the at least one sensor tube is located at least partially between the two housing segments (10a, 10b).

11. Sensor as claimed in one of the previous claims, wherein the housing cap (7) comprises:
- a channel-shaped cap segment (10c)
-- with a first arc-shaped segment edge (10c') of a predefinable radius (R) and
-- with a second segment edge (10c") which has an essentially identical shape to the first segment edge (10c'),
-- wherein the cap segment (10c) has an arc-shaped cross-section with a radius (r) which is smaller than the radius R of the first segment edge (10c'),
- an essentially planar first lateral housing segment (10a) which is connected to the first segment edge (10c') of the cap segment (10c) via an arc-shaped first segment edge (10a'), and
- a second lateral housing segment (10b) which is essentially symmetrically identical to the first lateral housing segment (10a), said second lateral housing segment being connected to the second segment edge (10c") of the first housing segment (10c) via a arc-shaped first segment edge (10b').

12. Sensor as claimed in the previous claim, wherein the first and the second lateral housing segment (10a, 10b) are both located on a tangential plane of the cap segment (10c).

13. Sensor as claimed in one of the Claims 11 to 14,
- wherein the at least one support element is formed by at least one solid plate which s connected to the sensor housing at least at two opposing fixing points, particularly using bolts and/or at least in a partially detachable manner, and/or
- wherein the at least one support element (13a) is formed by at least one solid plate which is at least fixed at points on both the housing cap (7) and the cylindrical support element (6) particularly in an at least partially detachable manner and/or at least at points using a substance-to-substance bond.

14. Sensor as claimed in one of the previous claims,
- said sensor further comprising at least one insert (14a, 14b) coupled with the sensor housing (10), especially extending at least partially between the at least one support element (13a) and the sensor housing (10), attenuating the vibrations, and made particularly from a plastic, a rubber, a silicone or similar material, and/or
- said sensor further comprising a first connection flange (2) on the inlet side, particularly having a mass of more than 50 kg, and a second connection flange (3) on the outlet side, particularly having a mass of more than 50 kg, said flanges serving to connect the sensor to the pipe, wherein in this respect the outer vibration system of the sensor (10) also comprises at least the first and the second connection flange (2, 3).

15. Sensor as claimed in one of the previous claims, further comprising a second support element (13b) also fixed, particularly directly, on the sensor housing (10), said second support element being essentially identical to the first support element (13a) and which is designed to form essentially fixed vibration nodes in the sensor housing (10), wherein in this respect the outer vibration system of the sensor also at least comprises the second support element (13b).

16. Sensor as claimed in the previous claim,
- wherein the sensor arrangement (70) comprises a first vibration sensor (71, 72), particularly arranged on the inlet side on at least one sensor tube (4) as well as a second vibration sensor (81, 82), particularly arranged on the outlet side on the at least one sensor tube (4), and
- wherein the first support element (13a) is fixed on the sensor housing at least partially near the first vibration sensor (71, 72) and the second support element (13b) is fixed at least partially near the second vibration sensor (81, 82).

17. Sensor as claimed in Claim 21 or 22, further comprising a third support element (13c) which is also fixed, particularly directly, on the sensor housing (10) to form essentially fixed vibration nodes in the sensor housing (10), wherein in this respect the outer vibration system of the sensor also comprises at least the third support element (13c).

18. Sensor as claimed in the previous claim,
- wherein the exciter arrangement (70) comprises at least one vibration exciter (61, 62), particularly arranged in the center on the at least one sensor tube, and
- wherein the third support element (13c) is fixed on the sensor housing (10) at least partially near the vibration exciter (61, 62).

19. Sensor as claimed in one of the Claims 1 to 22,
- wherein the sensor arrangement (70) comprises a first vibration sensor (71, 72), particularly arranged on the inlet side on the at least one sensor tube (4), as well as a second vibration sensor (81, 82), particularly arranged on the outlet side on the at least one sensor tube (4), and/or
- wherein the exciter arrangement (60) comprises at least one vibration exciter (61, 62), particularly arranged in the center on the at least one sensor tube (4).

20. Sensor as claimed in one of the previous claims, further comprising a second sensor tube (5) which is essentially identical and/or essentially parallel to the first sensor tube (4).

21. Sensor as claimed in the previous claim,
- further comprising at least a first gusset plate (217) interconnecting the first and second sensor tube (4, 5) on the inlet side, as well as at least a second gusset plate (218) interconnecting the first and the second sensor tube (4, 5) on the outlet side, wherein in this respect the inner vibration system of the sensor also comprises at least the first and the second gusset plate (217, 218), and/or
- further comprising a first manifold (11) interconnecting the first and second sensor tube (4, 5) on the inlet side, particularly a manifold having a mass of more than 10 kg, as well as a second manifold (12) interconnecting the first and second sensor tube (4, 5) on the outlet side, particularly a manifold having a mass of more than 10 kg, wherein in this respect the outer vibration system of the sensor also at least comprises the first and the second manifold (11, 12).

22. Sensor as claimed in one of the previous claims,
- wherein the outer vibration system has at least one vibration mode with a natural frequency which is smaller than the upper limit frequency of the useful frequency range (ΔFₙ) and which is larger than the lower limit frequency of the useful frequency range (ΔFₙ), and/or
- wherein the upper limit frequency of the useful frequency range (ΔFₙ) is when the density of the medium is essentially zero, particularly roughly the same as the density of air, and/or
- wherein the current useful vibration frequency (Fₙ) essentially corresponds to a current natural frequency of the inner vibration system, and/or
- wherein the useful frequency range (ΔFₙ) has a bandwidth of at least 20 Hz, particularly of more than 50 Hz.

23. Sensor as claimed in one of the previous claims wherein the outer vibration system of the sensor has at least one vibration mode with a lowest natural frequency that is smaller than the lower limit frequency of the useful frequency range (ΔFₙ).

24. Sensor as claimed in the previous claim, wherein the inner vibration system has at least one vibration mode with a natural frequency which, during operation, is always greater than the lowest natural frequency of the outer vibration system.

25. Sensor as claimed in one of the previous claims,
- wherein the lower limit frequency of the useful frequency range (ΔFₙ) is when the density of the medium is greater than 400 kg/m³, and/or
- wherein the lower limit frequency of the useful frequency range (ΔFₙ) is when the density of the medium is less than 2000 kg/m³.

26. Sensor as claimed in one of the previous claims, wherein the at least one useful vibration frequency (Fₙ) also depends significantly on a current viscosity of the medium.

27. Sensor as claimed in the previous claim,
- wherein the upper limit frequency of the useful frequency range (ΔFₙ) is when the viscosity of the medium is less than 100·10⁻⁶ Pas, particularly roughly the same as the viscosity of air, and/or
- wherein the lower limit frequency of the useful frequency range (ΔFₙ) is when the viscosity of the medium is greater than 300·10⁻⁶ Pas, and/or
- wherein the lower limit frequency of the useful frequency range (ΔFₙ) is when the viscosity of the medium is less than 3000·10⁻⁶ Pas.

28. Sensor as claimed in one of the previous claims,
- wherein the at least one sensor tube (4) and the sensor housing (10) are at least partially made of steel, particularly stainless steel, and/or
- wherein the at least one sensor tube (4) has a mass of at least 10 kg, particularly of more than 25 kg, and/or
- wherein the sensor tube (4) has an inner diameter that is at least 80 mm, particularly greater than 100 mm, and/or
- wherein the sensor tube (4) has a developed length of at least 1000 mm, particularly of more than 1500 mm, and/or
- wherein the sensor housing (10) has a mass of at least 80 kg, particularly of more than 160 kg, and/or
- wherein the sensor housing (10) has a minimum wall thickness that is less than 6 mm, and/or
- wherein a total mass of the inner vibration system is at least 70 kg, particularly during operation at least temporarily greater than 90 kg, and/or
- wherein a total mass of the outer vibration system is at least 200 kg, particularly greater than 300 kg, and/or
- wherein a mass ratio of a total mass of the outer vibration system to a total mass of the inner vibration system during operation at least temporarily, particularly permanently, is less than 3, particularly less than 2.5, and/or
- wherein an "installation-mass-to-nominal-diameter" ratio of an installation mass of the entire sensor to a nominal diameter of the sensor, which corresponds to a caliber of the pipe in which the sensor is to be inserted, is at least 1.5 kg/mm, particularly greater than 2 kg/mm, and/or
- wherein the installation mass of the entire sensor is greater than 200 kg, particularly greater than 400 kg, and/or
- wherein the at least one support element (13a) has a mass of at least 3 kg, and/or
- wherein the at least one support element (13a) is welded and/or soldered, particularly hard-soldered, at least at points with the sensor housing (10), and/or
- wherein the at least one support element (13a) is screwed at least at points to the sensor housing (10), and/or
- wherein the at least one support element (13a) is fixed at least at points to the sensor housing (10) in the area of a vibration loop, particularly in the area of a local vibration amplitude, of a natural vibration mode of the sensor housing (10).

29. Use of the sensor as claimed in one of the previous claims for measuring a medium which is able to flow and is conducted in a pipe which has a caliber greater than 150 mm, particularly greater than 250 mm or more, and/or for measuring a mass flow of a medium flowing through a pipe, said mass flow being at least temporarily greater than 900 t/h, particularly at least temporarily more than 1200 t/h.

## Revendications

1. Capteur du type à vibrations destiné à la mesure d'un fluide apte à s'écouler dans une conduite, notamment un gaz, un liquide, une poudre ou une autre substance apte à s'écouler, lequel capteur comprend :
- un boîtier de capteur (10), qui présente un grand nombre de modes de vibration naturels
- au moins un premier tube de capteur (4) supporté de façon apte à vibrer dans le boîtier de capteur (10) et vibrant au moins partiellement, lequel tube est destiné à acheminer au moins un volume partiel du produit à mesurer,
- un circuit excitateur (60) électromécanique, notamment électrodynamique, agissant sur l'au moins un tube de capteur, lequel circuit est destiné à générer et/ou maintenir les vibrations mécaniques de l'au moins un tube de capteur (4),
- un circuit capteur réagissant aux mouvements du tube de capteur (4), notamment aux vibrations de flexion, lequel circuit est destiné à générer au moins un signal de vibrations (s_{vb}) représentant les vibrations du tube de capteur (4), ainsi que
- au moins un élément support (13a) fixé, notamment directement, sur le boîtier de capteur (10), servant à la formation de noeuds de vibrations pour l'essentiel fixes à l'intérieur du boîtier de capteur (10), lequel élément est destiné à la suppression ou à l'extinction d'au moins un mode de vibration naturel du boîtier de capteur (10),
- pour lequel l'au moins un tube de capteur (4) comporte au moins un segment de tube (41) coudé pour l'essentiel en forme de U ou de V,
- pour lequel le boîtier de capteur (10) comporte un élément porteur (6) pour l'essentiel de forme cylindrique, notamment constitué d'acier, lequel élément est relié mécaniquement côté entrée et côté sortie à l'au moins un tube de capteur (4), ainsi qu'un capot de boîtier (7) disposé à distance de l'au moins un tube de capteur (4) et fixé sur l'élément porteur (6), notamment de façon fixe et/ou étanche au produit, lequel capot est destiné à encapsuler l'au moins un segment de tube coudé du tube de capteur,
- et pour lequel l'au moins un élément support (13a) est fixé au moins partiellement à l'élément porteur (6) cylindrique ainsi qu'au moins partiellement au capot de boîtier (7),
- pour lequel l'élément porteur (6) est conçu sous la forme d'un cylindre porteur, notamment tubulaire, ouvert au moins partiellement sur le côté, lequel élément est relié avec l'au moins un tube de capteur (4) de telle sorte que l'au moins un segment de tube coudé (41) sort latéralement du cylindre porteur,
- pour lequel le capot de boîtier (7) comporte des segments de boîtier (10a, 10b) disposés latéralement, à côté de l'au moins un segment de tube coudé (41) de l'au moins un tube de capteur (4), notamment disposés au moins par tronçons pour l'essentiel parallèlement au segment de tube coudé (41) et/ou pour l'essentiel en forme de plaque,
- et pour lequel l'au moins un élément support (13a, 13b) est fixé au moins partiellement aux segments de boîtier,
- pour lequel sont formés un système de vibration externe du capteur au moyen du boîtier de capteur et au minimum de l'au moins un élément support, et un système de vibration interne du capteur au moyen de l'au moins un tube de capteur (4), l'au moins un produit qui y est acheminé momentanément ainsi qu'au moins partiellement au moyen du circuit excitateur et capteur (60, 70),
- et pour lequel le système de vibration interne, entraîné par le circuit excitateur (60), exécute pendant le fonctionnement du capteur au moins temporairement des vibrations mécaniques, notamment sous forme de vibrations latérales, à au moins une fréquence de vibration utile (Fₙ),
-- qui dépend aussi bien de la taille, de la forme et du matériau du tube de capteur (4) que de la densité momentanée du produit, et
-- qui peut varier pendant le fonctionnement du capteur au sein d'une bande de fréquence utile (ΔFₙ) comportant une fréquence de coupure inférieure et supérieure.

2. Capteur selon la revendication 1, pour lequel le boîtier de capteur (10) et l'au moins un élément support (13a) sont formés et reliés mécaniquement entre eux de telle sorte que l'au moins un système de vibration du capteur ainsi formé n'exécute, malgré les vibrations du tube de capteur (4), au moins à l'intérieur de la bande de fréquence utile (ΔFₙ), aucune vibration ou tout au plus seules les vibrations parasites indésirables parmi lesquelles une puissance de vibration parasite générée momentanément est nettement inférieure à une puissance de vibration utile générée momentanément par les vibrations du système de vibration interne à la fréquence de vibration utile (Fₙ).

3. Capteur selon la revendication précédente,
- pour lequel un rapport puissance utile-parasite entre la puissance de vibration utile et la puissance de vibration parasite est au moins supérieur à 2, notamment supérieur à 5, et/ou
- pour lequel la puissance de vibration parasite correspond à une valeur moyenne de l'ensemble des puissances de vibration générées momentanément par les vibrations parasites au sein de la bande de fréquence utile (ΔFₙ).

4. Capteur selon l'une des revendications précédentes, pour lequel le boîtier de capteur (10) et l'au moins un élément support (13a) sont formés et reliés mécaniquement entre eux de telle sorte que l'au moins un système de vibration externe du capteur ainsi formé n'exécute, malgré les vibrations du tube de capteur (4), au moins à l'intérieur de la bande de fréquence utile (ΔFₙ), aucune vibration ou tout au plus seules les vibrations parasites indésirables parmi lesquelles une amplitude de vibration parasite maximale momentanée est nettement inférieure à une amplitude de vibration maximale momentanée des vibrations du système de vibration interne, notamment de l'au moins un tube de capteur (4) lui-même.

5. Capteur selon la revendication précédente, pour lequel un rapport d'amplitude utile-parasite entre l'amplitude de vibration maximale momentanée des vibrations du système de vibration interne et l'amplitude de vibration parasite maximale momentanée est supérieur à 1,5, notamment supérieur à 2.

6. Capteur selon l'une des revendications précédentes, pour lequel le boîtier de capteur (10) et l'au moins un élément support (13a) sont formés et reliés mécaniquement entre eux de telle sorte que l'au moins un système de vibration externe du capteur ainsi formé n'exécute, malgré les vibrations du tube de capteur (4), au moins à l'intérieur de la bande de fréquence utile (ΔFₙ), aucune vibration ou tout au plus seules les vibrations parasites indésirables parmi lesquelles une qualité de vibration parasite momentanée est nettement inférieure à une qualité de vibration utile momentanée des vibrations du système de vibration interne à la fréquence de vibration utile (Fₙ).

7. Capteur selon la revendication précédente, pour lequel un rapport de qualité de vibration utile-parasite entre la qualité de vibration utile momentanée et la qualité de vibration parasite momentanée est d'au moins 50:1, notamment supérieur à 80.

8. Capteur selon l'une des revendications précédentes, pour lequel l'élément porteur (6) présente une masse d'au moins 70 kg, notamment de plus de 140 kg, et/ou une longueur d'au moins 1 000 mm, notamment de plus de 1 200 mm.

9. Capteur selon l'une des revendications précédentes,
- pour lequel l'élément porteur (6) est conçu sous la forme d'un cylindre porteur, notamment tubulaire, ouvert au moins partiellement sur le côté, lequel cylindre présente une masse d'au moins 70 kg, notamment de plus de 140 kg, et/ou
- pour lequel le capot de boîtier présente une masse d'au moins 10 kg, notamment supérieure à 20 kg.

10. Capteur selon l'une des revendications précédentes, pour lequel au moins deux segments de boîtier (10a, 10b) sont disposés en vis-à-vis de telle sorte que l'au moins un segment de tube coudé (41) de l'au moins un tube de capteur se situe au moins partiellement entre les deux segments de boîtier (10a, 10b).

11. Capteur selon l'une des revendications précédentes, pour lequel le capot de boîtier (7) comprend :
- un segment de capot (10c) en forme de gouttière
-- avec un premier bord de segment (10c') en forme d'arc de cercle de rayon (R) prédéfinissable et
-- avec un deuxième bord de segment (10c") formé pour l'essentiel de façon identique par rapport au premier bord de segment (10c'),
-- pour lequel le segment de capot (10c) présente une section en forme d'arc de cercle avec un rayon (r) qui est inférieur au rayon R du premier bord de segment (10c'),
- un premier segment de boîtier (10a) latéral pour l'essentiel plan, qui est relié par le biais d'un premier bord de segment (10a') en forme d'arc de cercle avec le premier bord de segment (10c') du segment de capot (10c), ainsi que
- un deuxième segment de boîtier (10b) latéral pour l'essentiel symétrique par rapport au premier segment de boîtier (10a) latéral, lequel deuxième segment est relié par le biais d'un premier bord de segment (10b') en forme d'arc de cercle avec le deuxième bord de segment (10c') du premier segment de boîtier (10c).

12. Capteur selon la revendication précédente, pour lequel le premier et le deuxième segment de boîtier (10a, 10b) latéral se situent chacun dans un plan tangentiel du segment de capot (10c).

13. Capteur selon l'une des revendications 11 à 14,
- pour lequel l'au moins un élément support est formé au moyen d'au moins une plaque massive, qui est reliée avec le boîtier de capteur sur au moins deux points de fixation placés en vis-à-vis, notamment au moyen de boulons et/ou de façon au moins partiellement amovible, et/ou
- pour lequel l'au moins un élément support (13a) est formé au moyen d'au moins une plaque massive, qui est fixée au moins ponctuellement, notamment au moins de façon partiellement amovible et/ou au moins ponctuellement par combinaison de matière, aussi bien sur le capot de boîtier (7) que sur l'élément porteur (6) cylindrique.

14. Capteur selon l'une des revendications précédentes,
- lequel capteur comprend en outre une garniture (14a, 14b) couplée au boîtier de capteur (10), notamment s'étendant au moins partiellement entre l'au moins un élément support (13a) et le boîtier de capteur (10), amortissant les vibrations, notamment constituée d'une matière plastique, d'un caoutchouc, d'un silicone ou d'un matériau similaire, et/ou
- lequel capteur comprend pour le raccordement du capteur à la conduite en outre une premier bride de raccordement (2) côté entrée, notamment présentant une masse de plus de 50 kg, ainsi qu'une deuxième bride de raccordement (3) côté sortie,
notamment présentant une masse de plus de 50 kg, le système de vibration externe du capteur (10) comprenant également au moins la première et la deuxième bride de raccordement (2, 3).

15. Capteur selon l'une des revendications précédentes, qui comprend en outre un deuxième élément support (13b) fixé, notamment directement, également sur le boîtier de capteur (10), lequel deuxième élément est pour l'essentiel identique au premier élément support (13a) et qui est destiné à la formation dans le boîtier de capteur (10) de noeuds de vibration pour l'essentiel fixes, le système de vibration externe du capteur comprenant également au moins le deuxième élément support (13b).

16. Capteur selon la revendication précédente,
- pour lequel le circuit capteur (70) comprend un premier capteur de vibration (71, 72), notamment disposé côté entrée sur l'au moins un tube de capteur (4) ainsi qu'un deuxième capteur de vibration (81, 82), notamment disposé côté sortie sur l'au moins un tube de capteur (4), et
- pour lequel le premier élément support (13a) est fixé au moins partiellement à proximité du premier capteur de vibration (71, 72) et le deuxième élément support (13b) au moins partiellement à proximité du deuxième capteur de vibration (81, 82).

17. Capteur selon la revendication 21 à 22, comprenant en outre un troisième élément support (13c) fixé, notamment directement, également sur le boîtier de capteur (10), lequel troisième élément est destiné à la formation dans le boîtier de capteur (10) de noeuds de vibration pour l'essentiel fixes, le système de vibration externe du capteur comprenant également au moins le troisième élément support (13c).

18. Capteur selon la revendication précédente,
- pour lequel le circuit excitateur (60) comprend au moins un excitateur de vibration (61, 62), notamment disposé de façon centrée sur l'au moins un tube de capteur, et
- pour lequel le troisième élément support (13c) est fixé au moins partiellement à proximité de l'excitateur de vibration (61, 62) sur le boîtier de capteur (10).

19. Capteur selon l'une des revendications 1 à 22,
- pour lequel le circuit capteur (70) comprend un premier capteur de vibration (71, 72), notamment disposé côté entrée sur l'au moins un tube de capteur (4), ainsi qu'un deuxième capteur de vibration (81, 82), notamment disposé côté sortie sur l'au moins un tube de capteur (4), et/ou
- pour lequel le circuit excitateur (60) comprend au moins un excitateur de vibration (61, 62), notamment disposé de façon centrée sur l'au moins un tube de capteur (4).

20. Capteur selon l'une des revendications précédentes, comprenant en outre un deuxième tube de capteur (5) pour l'essentiel identique et/ou pour l'essentiel parallèle au premier tube de capteur (4).

21. Capteur selon la revendication précédente,
- comprenant en outre au moins une première plaque de liaison (217) reliant entre eux côté entrée le premier et le deuxième tube de capteur (4, 5), ainsi qu'au moins une deuxième plaque de liaison (218) reliant entre eux côté sortie le premier et le deuxième tube de capteur (4, 5), le système de vibration interne du capteur de mesure comprenant également au moins la première et la deuxième plaque de liaison (217, 218), et/ou
- comprenant en outre une première pièce de distribution (11) reliant entre eux côté entrée le premier et le deuxième tube de capteur (4, 5), notamment présentant une masse de plus de 10 kg, ainsi qu'une deuxième pièce de distribution (12) reliant entre eux côté sortie le premier et le deuxième tube de capteur (4, 5), notamment présentant une masse de plus de 10 kg, le système de vibration externe du capteur de mesure comprenant également au moins la première et la deuxième pièce de distribution (11, 12).

22. Capteur selon l'une des revendications précédentes,
- pour lequel le système de vibration externe présente au moins un mode de vibration avec une fréquence propre naturelle, qui est inférieure à la fréquence de coupure supérieure de la bande de fréquence utile (ΔFₙ) et qui est supérieure à la fréquence de coupure inférieure de la bande de fréquence utile (ΔFₙ), et/ou
- pour lequel la fréquence de coupure supérieure de la bande de fréquence utile (ΔFₙ) est déterminée lorsque la densité du produit est pour l'essentiel nulle, notamment environ égale à la densité de l'air, et/ou
- pour lequel la fréquence de vibration utile (Fₙ) momentanée correspond pour l'essentiel à une fréquence propre naturelle momentanée du système de vibration interne, et/ou
- pour lequel la bande de fréquence utile (ΔFₙ) présente une largeur de bande d'au moins 20 Hz, notamment de plus de 50 Hz.

23. Capteur selon l'une des revendications précédentes, pour lequel le système de vibration externe du capteur comporte au moins un mode de vibration avec une fréquence propre momentanée minimale, qui est inférieure à la fréquence de coupure inférieure de la bande de fréquence utile (ΔFₙ).

24. Capteur selon la revendication précédente, pour lequel le système de vibration interne comporte au moins un mode de vibration avec une fréquence propre naturelle qui, en fonctionnement, est toujours supérieure à la fréquence propre naturelle minimale du système de vibration externe.

25. Capteur selon l'une des revendications précédentes,
- pour lequel la fréquence de coupure inférieure de la bande de fréquence utile (ΔFₙ) est fixée lorsque la densité du produit est supérieure à 400 kg/m³, et/ou
- pour lequel la fréquence de coupure inférieure de la bande de fréquence utile (ΔFₙ) est fixée lorsque la densité du produit est inférieure à 2 000 kg/m³.

26. Capteur selon l'une des revendications précédentes, pour lequel l'au moins une fréquence de vibration utile (Fₙ) dépend dans une large mesure d'une viscosité momentanée du produit.

27. Capteur selon la revendication précédente,
- pour lequel la fréquence de coupure supérieure de la bande de fréquence utile (ΔFₙ) est fixée lorsque la viscosité du produit est inférieure à 100·10⁻⁶ Pas, notamment environ égale à une viscosité de l'air, et/ou
- pour lequel la fréquence de coupure inférieure de la bande de fréquence utile (ΔFₙ) est fixée lorsque la viscosité du produit est supérieure à 300·10⁻⁶ Pas, et/ou
- pour lequel la fréquence de coupure inférieure de la bande de fréquence utile (ΔFₙ) est fixée lorsque la viscosité du produit est supérieure à 3 000·10⁻⁶ Pas.

28. Capteur selon l'une des revendications précédentes,
- pour lequel l'au moins un tube de capteur (4) et le boîtier de capteur (10) sont constitués au moins partiellement d'acier, notamment d'acier inoxydable, et/ou
- pour lequel l'au moins un tube de capteur (4) présente une masse d'au moins 10 kg, notamment de plus de 25 kg, et/ou
- pour lequel l'au moins un tube de capteur (4) présente un diamètre intérieur d'au moins 80 mm, notamment supérieur à 100 mm, et/ou
- pour lequel l'au moins un tube de capteur (4) présente une longueur développée d'au moins 1 000 mm, notamment de plus de 1 500 mm, et/ou
- pour lequel le boîtier de capteur (10) présente une masse d'au moins 80 kg, notamment supérieure à 150 kg, et/ou
- pour lequel le boîtier de capteur (10) présente une épaisseur de paroi minimale inférieure à 6 mm, et/ou
- pour lequel une masse totale du système de vibration interne est d'au moins 70 kg, notamment en fonctionnement au moins temporairement supérieure à 90 kg, et/ou
- pour lequel une masse totale du système de vibration externe est d'au moins 200 kg, notamment supérieure à 300 kg, et/ou
- pour lequel un rapport de masse entre une masse totale du système de vibration externe et une masse totale du système de vibration interne est, en fonctionnement, au moins temporairement, notamment durablement, inférieur à 3, notamment inférieur à 2,5, et/ou
- pour lequel un rapport "masse de montage-diamètre nominal" entre la masse de montage du capteur complet et un diamètre nominal du capteur, qui correspond à un calibre de la conduite, dans le tracé de laquelle le capteur doit être inséré, est d'au moins 1,5 kg/mm, notamment supérieur à 2 kg/mm, et/ou
- pour lequel la masse de montage du capteur complet est supérieure à 200 kg, notamment supérieure à 400 kg, et/ou
- pour lequel l'au moins un élément support (13a) présente une masse d'au moins 3 kg, et/ou
- pour lequel l'au moins un élément support (13a) est soudé et/ou brasé, notamment brasé fort, au moins ponctuellement avec le boîtier de capteur (10), et/ou
- pour lequel l'au moins un élément support (13a) est vissé au moins ponctuellement avec le boîtier de capteur (10), et/ou
- pour lequel l'au moins un élément support (13a) est fixé au moins ponctuellement au boîtier de capteur (10) dans la zone du ventre de vibration, notamment dans la zone d'une amplitude de vibration locale, d'un mode de vibration naturel du boîtier de capteur (10).

29. Utilisation du capteur selon l'une des revendications précédentes pour la mesure d'un fluide apte à s'écouler, qui est acheminé dans une conduite présentant un calibre supérieur à 150 mm, notamment supérieur à 250 mm ou plus, et/ou pour la mesure d'un débit massique d'un produit s'écoulant à travers une conduite, lequel débit est au moins temporairement supérieur à 900 t/h, notamment au moins temporairement supérieur à 1 200 t/h.
